# EUROPEAN PATENT APPLICATION

(11) **EP 1 821 513 A2**
(43) Date of publication of application: **22.08.2007**
(21) Application number: 07250721.3
(22) Date of filing: 21.02.2007
(51) Int. Cl.: H04N 1/00

(54) **An image formation apparatus, an information outputting apparatus, a stored data acquisition method, a program, and a recording medium**

(30) Priority: 21.02.2006 JP 2006044348; 13.12.2006 JP 2006336199
(71) Applicant: Ricoh Company, Ltd., Tokyo 143-8555 (JP)
(72) Inventor: Yoshida, Takuya, Itabashi-ku Tokyo (JP)
(74) Representative: Mounteney, Simon James

(57) **Abstract**

An image formation apparatus, an information outputting apparatus, a stored data acquisition method, a program, and a recording medium. The image formation apparatus includes: an input/output unit for controlling reception of an image data request from an information outputting apparatus connected through a communication line, the information outputting apparatus requesting the image data, and transmission of the image data to the information outputting apparatus according to the image data request; a storage unit for storing the image data in a predetermined format; and a format conversion unit for converting the image data into a format specified in the image data request; wherein the input/output unit provides the image data in the specified format to the information outputting apparatus.

## Description

### BACKGROUND OF THE INVENTION

### 1. Field of the Invention

The present invention relates to a storage unit for storing image data, an image formation apparatus that is capable of acquiring the stored image data in a specified format, which image formation apparatus is connected to the storage unit, an information outputting apparatus, a stored data acquisition method, a program, and a recording medium.

### 2. Description of the Related Art

There is a conventional file system that is capable of
storing data when processing the same data,
offering reference and reuse when required, and
maintaining the security of backed up processed data for use (for example, Patent Reference 1).

According to the conventional file system, the following processes are performed. A copying machine provides document data and additional data such as a user ID, and a processing date and time, to a server apparatus through an intranet in response to a process request of, e.g., a copying function. The server apparatus stores the document data in a mass storage, and stores its starting address and other additional data in a database in a hard disk drive unit for every user ID. The starting address and the additional data can be searched for. In this way, when using the document data, the document data can be easily located by displaying a thumbnail image of the document data in a calendar view. If there is one of a confidential (security) command and an encryption command, a confidential mark and an encryption mark are displayed such that a third party is not permitted to view the contents.
[Patent reference 1] JPA H11-143907
[Patent reference 2] JPA 2004-133922

### [Problem and Solution]

However, there are the following problems in the background technique described above.

One of the problems is in that a PDF (Portable Document Format) format cannot be specified when acquiring the image data stored by a multifunction machine.

Another problem is in that security in a specified format, for example, security in the PDF format cannot be provided when acquiring the image data stored in the multifunction machine.

### SUMMARY OF THE INVENTION

The present invention provides an image formation apparatus, an information outputting apparatus, a stored data acquisition method, a program, and a recording medium that substantially obviate one or more of the problems caused by the limitations and disadvantages of the related art.

Specifically, the image formation apparatus, the information outputting apparatus, the stored data acquisition method, the program, and the recording medium enable a client PC to acquire image data in a PDF format, which image data are stored in an apparatus for storing the image data, where the client PC is connected to the image formation apparatus.

Further, the image formation apparatus, the information outputting apparatus, the stored data acquisition method, the program, and the recording medium enable the client PC to acquire image data with security in a format specified by the client PC, where the image data are stored in an apparatus for storing the image data, and the client PC is connected to the image formation apparatus.

Features of embodiments of the present invention are set forth in the description that follows, and in part will become apparent from the description and the accompanying drawings, or may be learned by practice of the invention according to the teachings provided in the description. Problem solutions provided by an embodiment of the present invention may be realized and attained by the image formation apparatus, the information outputting apparatus, the stored data acquisition method, and the program particularly pointed out in the specification in such full, clear, concise, and exact terms as to enable a person having ordinary skill in the art to practice the invention.

To achieve these solutions and in accordance with an aspect of the invention, as embodied and broadly described herein, an embodiment of the invention provides the image formation apparatus, the information outputting apparatus, the stored data acquisition method, and the program as follows.

### [Means for solving a problem]

A preferred embodiment of the present invention provides an image formation apparatus such as a compound machine that includes:
an input/output control unit for controlling reception of an image data request from an information outputting apparatus such as a client PC that issues the image data request, which information outputting apparatus is connected to the image formation apparatus through a communication line, and for controlling transmission of the image data to the information outputting apparatus according to the image data request;
a storage unit for storing the image data in a predetermined format; and
a format conversion unit for converting the format of the image data from the predetermined format into a format specified by the image data request;
wherein the input/output control unit transmits the image data, the format of which has been converted into the specified format, to the information outputting apparatus.

In this way, the image data in the predetermined format are converted into image data in the specified format.

Further, the information outputting apparatus includes:
a stored data referencing unit for providing the image data request to the image formation apparatus connected through the communication line, and for receiving the requested image data provided by the image formation apparatus; and
a format specifying unit for specifying a desired format of the image data to be acquired;
wherein the stored data referencing unit provides the image data request to the image formation apparatus for the image data that are converted into the specified format.

In this way, the image data that have been converted into the specified format can be requested.

Another aspect of the embodiment provides the stored data acquisition method including:
an image data requesting step of issuing the image data request to the image formation apparatus connected through the communication line;
an image data request receiving step of receiving the image data request issued by the information outputting apparatus;
a format conversion step for converting the image data in the predetermined format into a format specified by the image data request;
a transmitting step of transmitting the image data, the format of which has been converted into the specified format, to the information outputting apparatus; and
an image data acquisition step of acquiring the image data in the specified format provided by the image formation apparatus.

In this way, the format of the image data to be acquired can be specified and the image data converted into the specified format can be acquired.

Another aspect of the embodiment provides a computer-executable program for a computer to function as the input/output control unit, and as the format specifying unit. When the computer functions as the input/output control unit, the program causes the image data in the specified format to be provided to the information outputting apparatus.

Further, the program causes the computer to function as the image data referencing unit and as the format specifying unit. When the computer functions as the image data referencing unit, the image data converted into the specified format are requested of the image formation apparatus.

Another aspect of the embodiment provides the recording medium that stores the program described above.

### [Effectiveness of invention]

According to the embodiment of the present invention, the image formation apparatus, the information outputting apparatus, the stored data acquisition method, the program, and the recording medium are capable of providing image data in a PDF format from the apparatus for storing image data to the client PC connected to the apparatus for storing image data.

Further, according to the embodiment of the present invention, the image formation apparatus, the information outputting apparatus, the stored data acquisition method, the program, and the recording medium are capable of providing image data with security in a specified format.

### BRIEF DESCRIPTION OF THE DRAWINGS

Fig. 1 is a block diagram of a system that includes an image formation apparatus according to an embodiment of the present invention;
Fig. 2 is the block diagram of the image formation apparatus and a client PC according to the embodiment of the present invention;
Fig. 3 is a flowchart of a stored data acquisition process according to the embodiment of the present invention;
Fig. 4 shows an example of a screen shown by a list display/selection operation unit;
Fig. 5 is a block diagram of the image formation apparatus and the client PC according to another embodiment of the present invention;
Fig. 6 is a flowchart of the stored data acquisition process according to the embodiment of the present invention;
Fig. 7 shows an example of a format specifying screen for specifying the format of data to be acquired;
Fig. 8 is a block diagram of the image formation apparatus and the client PC according to another embodiment of the present invention;
Fig. 9 is a flowchart of the stored data acquisition process according to the embodiment of the present invention;
Fig. 10 shows an example of the format specifying screen for specifying the format of data to be acquired;
Fig. 11 is a flowchart of the stored data acquisition process according to the embodiment of the present invention;
Fig. 12 shows an example of a user password specifying screen;
Fig. 13 is a flowchart of the stored data acquisition process according to the embodiment of the present invention;
Fig. 14 shows an example of a master password specifying screen;
Fig. 15 shows an example of an encryption level specifying screen;
Fig. 16 shows an example of an authorization option specifying screen; and
Fig. 17 shows another example of the authorization option specifying screen.

### DESCRIPTION OF THE PREFERRED EMBODIMENTS

In the following, embodiments of the present invention are described with reference to the accompanying drawings.

In describing the embodiments, the same reference numbers are assigned to the same functional units, and descriptions may not be repeated.

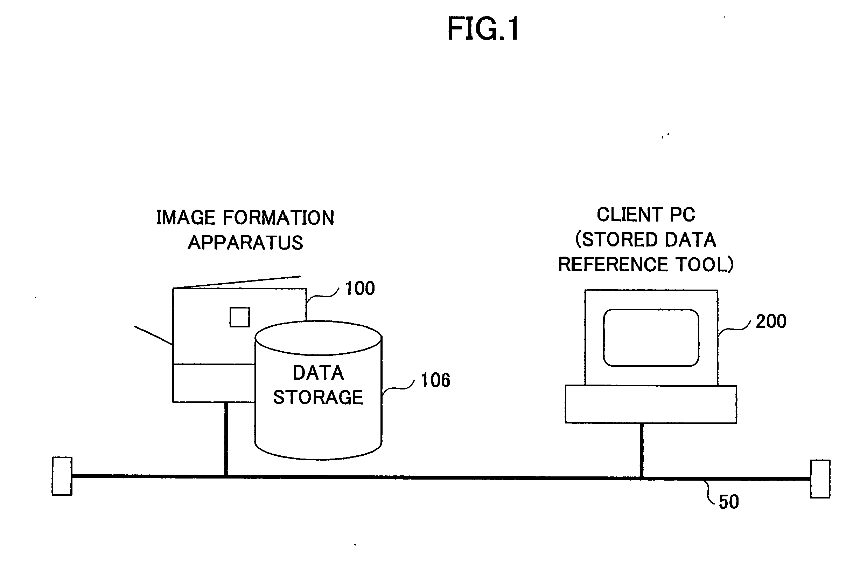

Fig. 1 shows a system that includes an image formation apparatus and an information outputting apparatus according to the first embodiment of the present invention.

Here, the image formation apparatus is, for example, a multifunction machine (MFP: Multi Function Printer) 100 that is capable of storing image data; and the information outputting apparatus is a client PC 200.

The multifunction machine 100 and the client PC 200 are connected through a communication line 50.

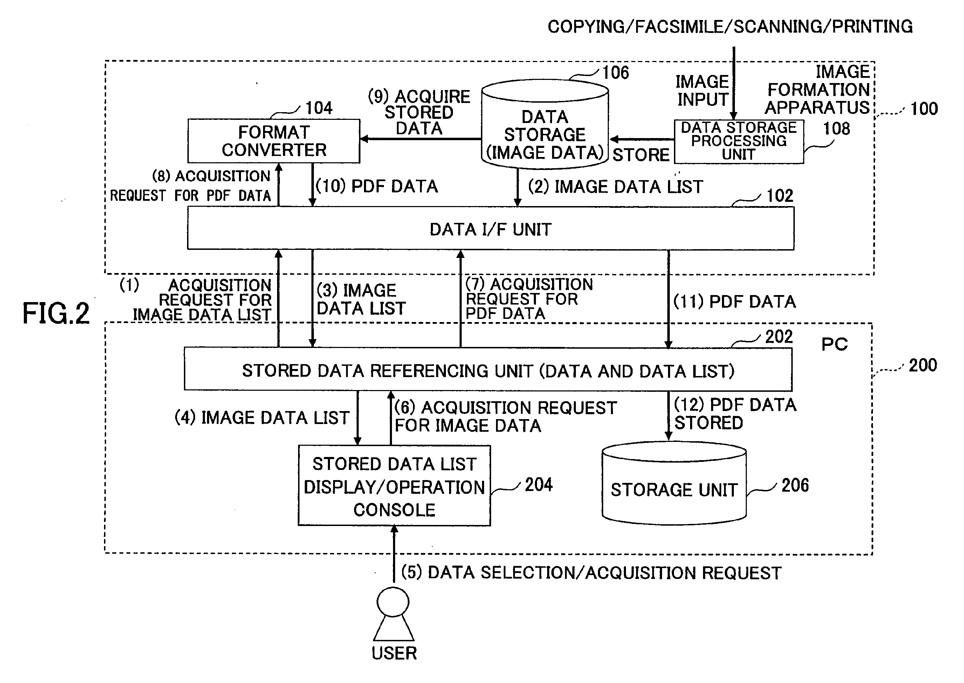

The multifunction machine 100 according to the embodiment of the present invention is described with reference to Fig. 2.

The multifunction machine 100 according to the present embodiment is capable of performing at least one of copy, fax, scan, and printing functions. Further, when any one of the functions is performed, the multifunction machine 100 is capable of storing image data. Further, the multifunction machine 100 includes an interface so that the image data stored in the multifunction machine may be available in various formats to an external device such as the client PC 200 connected through the communication line 50.

The multifunction machine 100 includes a data I/F unit 102 for inputting/outputting data, a format converter 104 that receives an output signal of the data I/F unit 102, a data storage processing unit 108 into which image data are input when at least one of the functions ( copy, fax, scan, and printing) is performed, and a data storage 106 for storing an output signal provided by the data storage processing unit 108. The output signal from the data storage 106 is provided to the format converter 104 and the data I/F unit 102.

When at least one of the functions (copy, fax, scan, and printing) is performed, image data are provided by the performed function, the data storage processing unit 108 converts the image data into image data in a predetermined format that is original (may be peculiar) to the multifunction machine, and the image data in the predetermined format are provided to the data storage 106.

The data storage 106 stores the image data provided by the data storage processing unit 108.

The format converter 104 acquires the image data stored in the data storage 106, and performs format conversion of the acquired image data. For example, the format converter 104 converts the image data in the predetermined format (original of the multifunction machine) into a PDF format. Then, the format converter 104 provides the image data in the PDF format to the data I/F unit 102.

The data I/F unit 102 provides an image data request issued by the client PC 200 to the format converter 104. Then, the data I/F unit 102 provides the image data, the format of which has been converted by the format converter 104, for example, the image data in the PDF format, to the client PC 200. Further, the data I/F unit 102 provides a list of image data stored (image data list) in the data storage 106 to the client PC 200.

For example, the data I/F unit 102 includes a NCS (Network Control Service). The NCS includes a group of modules for offering services that are commonly used by applications that require network input/output, and performs coordination when distributing data received from the network by a protocol to each application, or when transmitting data to the network from an application (for example, Patent Reference 2).

Here, the multifunction machine 100 serving as the image formation apparatus according to the present embodiment may be realized by an embedded system. The embedded system includes a CPU that performs operational processes according to a program, a ROM (read-only memory), a RAM (random access memory), a storage unit such as a flexible-disk apparatus, and a mass external storage such as a hard disk drive unit.

A program for a computer to function as the format converter 104 and the data I/F unit 102 is stored in a recording medium such as a flexible disk, a CD-ROM, and a memory card. When the recording medium is inserted into the storage of the computer, the program stored in the medium is read. Then, the CPU writes the read program into the RAM or an external storage, and performs the processes as described above according to the program. Here, the program may be downloaded through the communication line 50.

In this case, the program is stored in the data storage 106. Further, the computer performs inputting/outputting control for controlling reception of the image data request from the information outputting apparatus (connected through the communication line) that requires the image data, and transmission of the image data to the information outputting apparatus according to the image data request. Further, the computer converts the image data in the predetermined format into the format specified by the image data request. The converted image data are transmitted to the information outputting apparatus, namely the client PC 200.

Next, the client PC 200 according to the embodiment of the present invention is described with reference to Fig. 2.

The client PC 200 includes a stored data reference tool for acquiring the image data using the interface (the data I/F unit 102) of the multifunction machine 100.

The client PC 200 includes a stored data referencing unit 202, a storage unit 206 for storing an output signal provided by the stored data referencing unit 202, and a stored data list display/operation console 204 for specifying a format. The output signal of the stored data list display/operation console 204 is provided to the stored data referencing unit 202.

The stored data referencing unit 202 issues a request to the multifunction machine 100 for acquiring the list of stored image data (image data list) and the image data converted into the PDF format. Then, the stored data referencing unit 202 acquires the image data list and the image data in the PDF format, which are stored in and transmitted by the multifunction machine 100.

For example, the stored data referencing unit 202 is connected to the multifunction machine 100, and the image data list stored in the multifunction machine 100 is requested. Then, the image data list that is stored in and transmitted from the multifunction machine 100 is acquired, and provided to the stored data list display/operation console 204.

The stored data list display/operation console 204 displays the provided image data list. Then, a user selects a desired set of the image data from sets of the image data from the list displayed by operating the stored data list display/operation console 204. Further, the stored data list display/operation console 204 provides a result of the user selection to the stored data referencing unit 202. The stored data referencing unit 202 issues a request to acquire the selected set of the image data to the multifunction machine 100.

For example, when the request to acquire the image data selected by the user is issued, the stored data referencing unit 202 transmits the request to acquire the image data in a specified format to the multifunction machine 100. For example, when the request specifies a PDF format, the stored data referencing unit 202 transmits the request to acquire the image data in the PDF format to the multifunction machine 100. Consequently, the client PC 200 acquires the image data in the specified format, for example, the PDF format.

The stored data referencing unit 202 stores the image data in the specified format, for example, the acquired image data in the PDF format, in the storage unit 206.

Here, the client PC 200 serving as the information outputting apparatus according to the present embodiment can be realized by an embedded system. The embedded system includes a CPU for performing operational processes according to a program, a ROM (read-only memory), a RAM (random access memory), a storage unit such as flexible-disk apparatus, and a mass external storage such as a hard disk drive unit.

A program for a computer to function as the stored data referencing unit 202 and as the stored data list display/operation console 204 is stored in a recording medium such as a flexible disk, a CD-ROM, and a memory card. When the recording medium is inserted into the storage of the computer, the program stored in the recording medium is read. Then, the CPU writes the read program in the RAM or an external storage, and performs the processes described according to the program. Further, the program may be downloaded through the communication line 50.

In this case, the program to be executed is stored in the storage unit 206, and causes the computer to perform stored data referencing by requesting image data of the image formation apparatus connected through the communication line 50, and by acquiring the image data transmitted by the image formation apparatus. The program further causes the computer to perform format specifying to specify a format of the image data to be acquired. When the computer performs stored data referencing, a request for the image data converted into the specified format is issued to the image formation apparatus, namely the multifunction machine 100.

Next, the processes performed by the system including the multifunction machine 100 and the client PC 200 are described with reference to Fig. 2.

The client PC 200, specifically, the stored data referencing unit 202 is connected to the multifunction machine 100, and issues an acquisition request for acquiring the image data list stored in the multifunction machine 100 (1).

The multifunction machine 100 receives the acquisition request, the data I/F unit 102 refers to the data storage 106 (2), and provides the image data list stored in the data storage 106 to the stored data referencing unit 202 in response to the request (3).

The stored data referencing unit 202 receives the image data list and provides the image data list to the stored data list display/operation console 204.

The stored data list display/operation console 204 displays the image data list to the user (4).

The user selects a desired set of image data on the stored data list display/operation console 204 out of sets of image data, and issues an image data acquisition request (5).

The image data acquisition request is provided to the stored data referencing unit 202 by the stored data list display/operation console 204 (6). The stored data referencing unit 202 that receives the image data acquisition request issues an image data acquisition request to the multifunction machine 100 (7).

The multifunction machine 100 receives the image data acquisition request, the data I/F unit 102 provides the image data acquisition request to the format converter 104 (8), the format converter 104 acquires the requested image data from the data storage 106 (9), and the format converter 104 converts the format of the image data into PDF. The format converter 104 provides the image data in the PDF format to the stored data referencing unit 202 through the data I/F unit 102 (10). In this way, the image data converted into the PDF format are provided to the data I/F 102, and are further provided to the stored data referencing unit 202 (11).

The stored data referencing unit 202 receives the image data in the PDF format, and stores the same in the storage unit 206 of the client PC 200 (12).

Here, although the embodiment has been described about the image data being converted into the PDF format, this is not a limitation; conversion into a format other than PDF is possible. In this case, the stored data list display/operation console 204 displays available formats for conversion and the image data list (4).

The user selects a desired set of the image data on the stored data list display/operation console 204 out of sets of the stored image data listed, specifies a desired format, and issues the image data acquisition request (5).

The image data acquisition request is provided by the stored data list display/operation console 204 to the stored data referencing unit 202 (6). The stored data referencing unit 202 receives the image data acquisition request, and issues the image data acquisition request to the multifunction machine 100 (7).

The multifunction machine 100 receives the image data acquisition request, and the data I/F unit 102 provides the image data acquisition request to the format converter 104 (8). Then, the format converter 104 acquires the requested image data from the data storage 106 (9), and converts the format of the image data into the specified format.

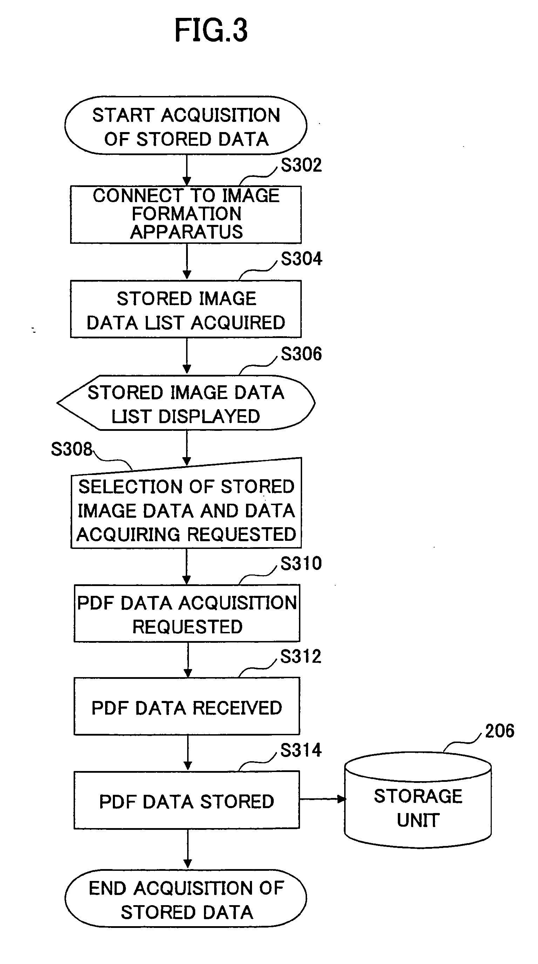

Next, operations of the system including the multifunction machine 100 and the client PC 200 according to the present embodiment are described with reference to Fig. 3. Here, an example wherein the image data are converted into the PDF format is described; nevertheless, converting into a format other than PDF is possible.

At step S302, the stored data referencing unit 202 is connected to the multifunction machine 100 through the data I/F unit 102.

Next, the stored data referencing unit 202 issues a request to the data I/F unit 102 for acquiring an image data list. The data I/F unit 102 refers to the image data list stored in the data storage 106, and provides the image data list to the stored data referencing unit 202.

The stored data referencing unit 202 provides the acquired image data list to the stored data list display/operation console 204 (step S304).

The stored data list display/operation console 204 displays the provided image data list (step S306).

Next, the user selects a desired set of the image data, and issues the image data acquisition request by operating the stored data list display/operation console 204 (step S308).

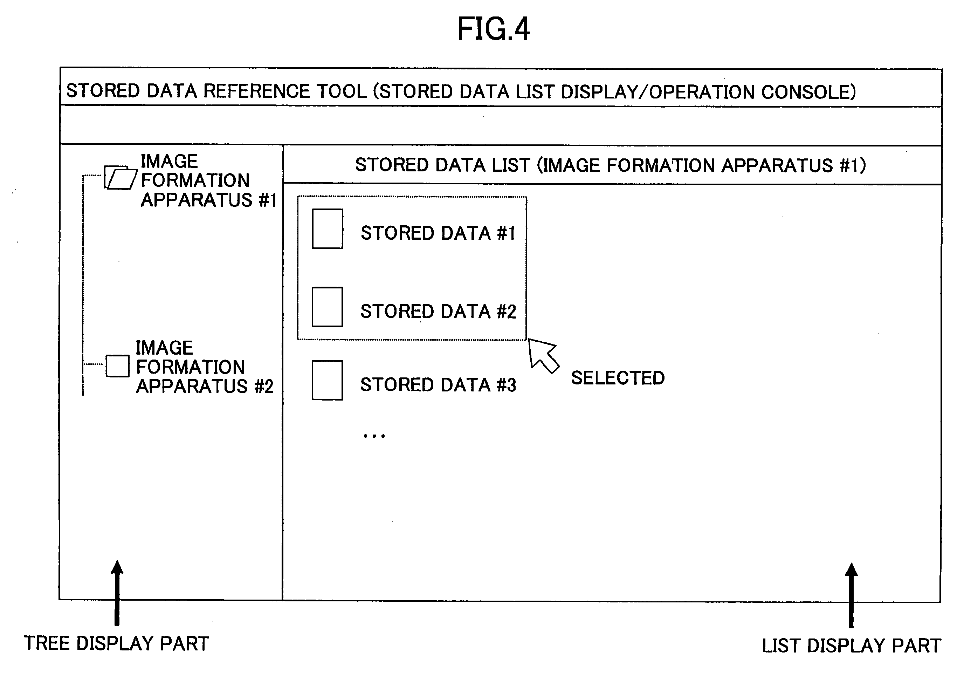

For example, a stored data reference tool (screen) is displayed on the stored data list display/operation console 204 as shown in Fig. 4, where the screen includes a tree display part wherein connected apparatuses are shown, and a list display part wherein names of sets of stored data for each connected apparatus are shown. The user selects a desired connected apparatus at the tree display part, and selects a desired set of image data from the sets of image data stored in the selected apparatus.

The stored data list display/operation console 204 provides the image data acquisition request to the stored data referencing unit 202 according to this operation (step S310).

The stored data referencing unit 202 provides the image data acquisition request to the data I/F unit 102 of the multifunction machine 100 according to the image data acquisition request from the stored data list display/operation console 204. The data I/F unit 102 provides the image data acquisition request to the format converter 104. The format converter 104 requests the data storage 106 to send the requested image data, and acquires the image data. Then, the format converter 104 converts the format of the acquired image data into PDF, and provides the PDF image data to the data I/F unit 102. The data I/F unit 102 provides the PDF image data to the client PC 200.

The stored data referencing unit 202 receives the image data converted into the PDF format provided by the multifunction machine 100 (step S312). The stored data referencing unit 202 stores the received PDF image data in the storage unit 206 (step S314).

In this way, the desired image data stored in the multifunction machine 100 are received by the client PC 200.

According to the present embodiment, the image data stored in the multifunction machine 100 are available to the client PC 200, which is connected to the multifunction machine 100, in the specified format, for example, the PDF format.

If the PDF format is specified as the desired format, merits of PDF can be enjoyed, for example, the image data can be used by different PC models and environments such as different platforms (e.g., UNIX (trademark), and Windows).

Further, since the image data in the PDF format, which is the de-facto standard, is readily available from the multifunction machine 100 that stores the image data, the time and effort that may be otherwise needed by the client PC 200 for converting the image data into the PDF format are dispensed with. That is, since an environment for the format conversion by the client PC 200 is unnecessary, the resources of the client PC 200 can be efficiently used. Conversely, if the format conversion has to be carried out by the client PC 200, installation of PDF conversion software is required, and space on a hard disk is also required. Furthermore, the CPU workload may be increased due to processing the format conversion to PDF.

Next, a system that includes the image formation apparatus 100 and the information outputting apparatus 200 according to another embodiment (the second embodiment) of the present invention is described.

According to the present embodiment, image data stored in the image formation apparatus 100 are available in two or more formats to an external apparatus such as the client PC 200.

The configuration of the system according to the present embodiment is the same as shown in Fig. 1, and the description is not repeated.

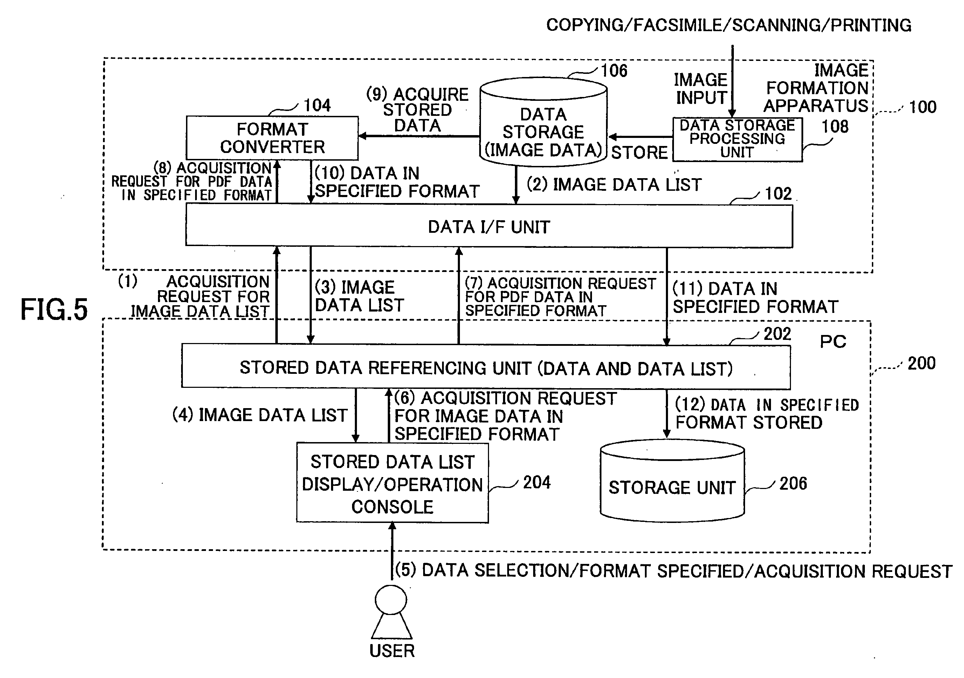

Further, the configuration of the multifunction machine 100 and the client PC 200 according to the present embodiment is shown in Fig. 5, and is the same as the configuration of the multifunction machine 100 and the client PC 200 described with reference to Fig. 2.

The format converter 104 converts the format of the image data stored in the data storage 106 into another format as specified by the user. Format conversion is performed into any one of the following formats, e.g., PDF, TIFF (Tagged Image File Format), and JPEG (Joint Photographic Experts Group) as specified by the user.

Here, if the multifunction machine 100 is realized by an embedded system, the process described above is carried out by the CPU of the embedded system functioning as the format conversion unit according to a format conversion program for the specified format.

The stored data referencing unit 202 provides a format specifying screen for the stored data list display/operation console 204. The format specifying screen includes the image data list acquired from the multifunction machine 100, and a portion for specifying the format of the image data to be acquired.

The stored data list display/operation console 204 displays the format specifying screen.

Then, the user operates the stored data list display/operation console 204 for selecting a desired set of image data from sets of the stored image data that are indicated by the list, and specifies a desired format out of the formats indicated by the format specifying screen. For example, the user can specify at least one format out of PDF, TIFF, and JPEG by operating the stored data list display/operation console 204. Here, other formats may be made available.

When the user completes the image data request by specifying the desired image data and the format thereof, the stored data list display/operation console 204 provides the image data request to the stored data referencing unit 202.

The stored data referencing unit 202 provides the image data request to the multifunction machine 100.

Here, if the information outputting apparatus 200 is realized by an embedded system, the process described above is carried out by the CPU of the embedded system functioning as the format specifying unit according to a format conversion program for the specified format.

Next, the processes performed by the system that includes the multifunction machine 100 and the client PC 200 are described with reference to Fig. 5.

The stored data referencing unit 202 of the client PC 200 is connected to the multifunction machine 100, and issues an acquisition request for the image data list that indicates sets of image data stored in the multifunction machine 100 (1).

The multifunction machine 100 receives the request, the data I/F unit 102 refers to the data storage 106 in response to the request, and the image data list is returned to the stored data referencing unit 202 (2, and 3).

The stored data referencing unit 202 provides the received image data list to the stored data list display/operation console 204.

The stored data list display/operation console 204 displays the image data list to the user (4).

The user selects a desired set of the image data out of the sets of the stored image data indicated by the image data list on the stored data list display/operation console 204, and issues the image data acquisition request (image data request) (5).

Further, the stored data list display/operation console 204 displays the format specifying screen for the image data to be acquired.

The user specifies a desired format of the image to be acquired on the format specifying screen. When an "OK" button is pushed, the stored data list display/operation console 204 issues the image data acquisition request containing the format specified by the user.

The image data acquisition request is provided to the stored data referencing unit 202 by the stored data list display/operation console 204. Then, the stored data referencing unit 202 issues the image data acquisition request to the multifunction machine 100 (6, and 7).

The multifunction machine 100 receives the image data acquisition request, the data I/F unit 102 provides the image data acquisition request to the format converter 104 (8), and the format converter 104 acquires the requested image data from the data storage 106 (9). Then, the format of the image data is converted into the format specified by the image data acquisition request. The format converter 104 provides the image data converted into the specified format to the stored data referencing unit 202 through the data I/F unit 102. Consequently, the image data converted into the specified format are provided to the data I/F unit 102 (10), and are further provided to the stored data referencing unit 202 (11).

The stored data referencing unit 202 stores the image data in the specified format in the storage unit 206 of the client PC 200 (12).

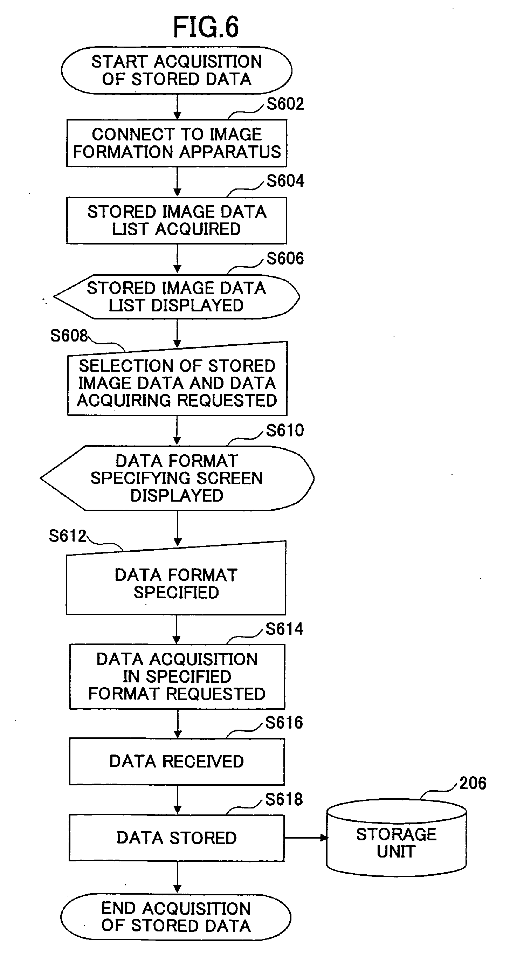

Next, operations of the system that includes the multifunction machine 100 and the client PC 200 according to the present embodiment are described with reference to Fig. 6.

At step S602, the stored data referencing unit 202 is connected to the multifunction machine 100 through the data I/F unit 102.

Next, at step S604, the stored data referencing unit 202 issues the image data request to the data I/F unit 102 for acquiring the image data list stored. The data I/F unit 102 provides the image data list to the stored data referencing unit 202 referring to the image data list stored in the data storage 106.

The stored data referencing unit 202 provides the acquired image data list to the stored data list display/operation console 204 (step S604).

The stored data list display/operation console 204 displays the image data list (step S606).

Next, the user selects a desired set of the image data on the stored data list display/operation console 204, and the image data acquisition request is issued (step S608).

Next, the stored data list display/operation console 204 displays the format specifying screen for specifying a desired format of the image data to be acquired (step S610).

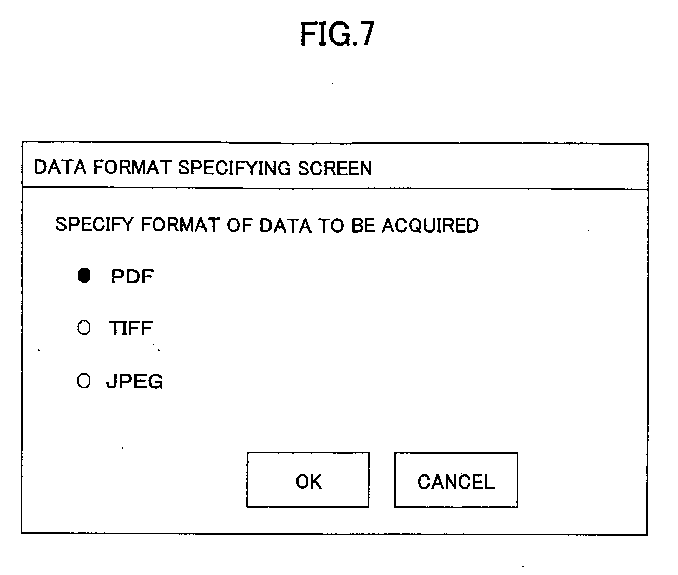

For example, as shown in Fig. 7, radio buttons for selecting at least one of PDF, TIFF, and JPEG are given on the stored data list display/operation console 204 as the format specifying screen.

Next, the user specifies the desired format of the image data to be acquired on the format specifying screen (step S612). For example, choices are PDF, TIFF, and JPEG. When at least one radio button is selected, and the "OK" button is pushed, the format of the image data to be acquired is specified.

The stored data list display/operation console 204 issues the image data acquisition request to the stored data referencing unit 202 (step S614).

The stored data referencing unit 202 issues the image data acquisition request to the data I/F unit 102 of the multifunction machine 100 according to the image data acquisition request from the stored data list display/operation console 204. The data I/F unit 102 provides the image data acquisition request to the format converter 104. The format converter 104 acquires the requested image data from the data storage 106, converts the format of the acquired image data into the specified format, and provides the image data in the specified format to the data I/F unit 102. The data I/F unit 102 provides image data in the specified format to the client PC 200.

The stored data referencing unit 202 receives the image data converted into the specified format, and transmitted from the multifunction machine 100 (step S616). The stored data referencing unit 202 stores the received image data in the specified format in the storage unit 206 (step S618).

In this way, the image data stored in the multifunction machine 100 are acquired by the client PC 200.

According to the present embodiment, the image data can be acquired not necessarily in the PDF format, but in other formats from the multifunction machine 100.

In this way, the image data in a wide choice of formats are available.

Next, a system including the image formation apparatus 100 and the information outputting apparatus 200 according to the third embodiment of the present invention is described.

The configuration of the system according to the present embodiment is the same as that of the configuration described with reference to Fig. 1, and, accordingly, descriptions are not repeated.

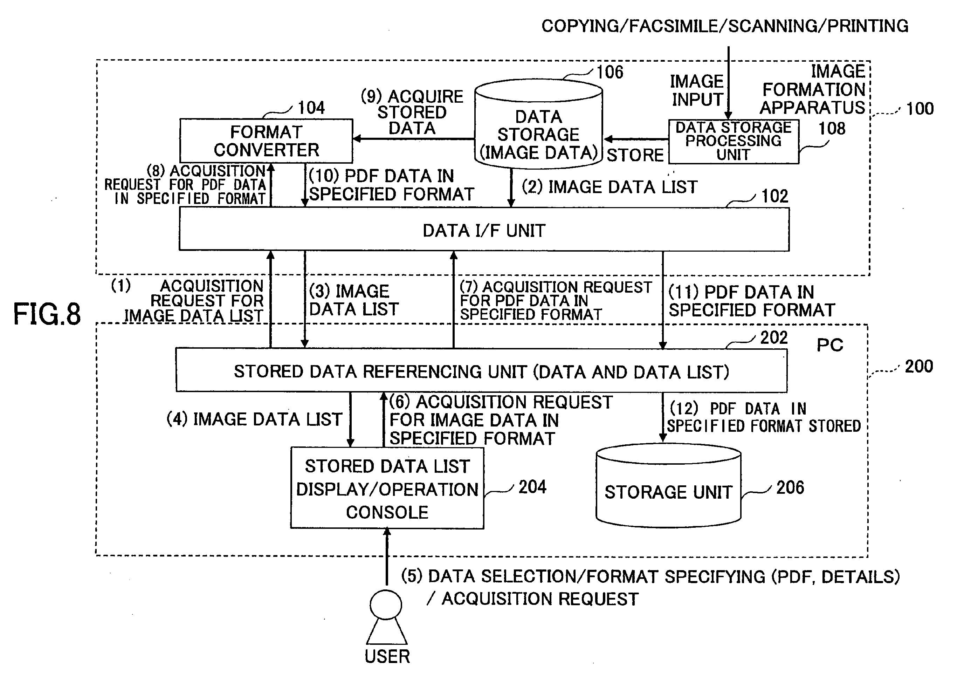

Further, the configuration of the multifunction machine 100 and the client PC 200 according to the present embodiment as shown in Fig. 8 is the same as the configuration of the multifunction machine 100 and the client PC 200 described with reference to Fig. 2.

According to the present embodiment, the format converter 104 converts the image data stored at the data storage 106 into one of a multi-page format and a single page format, when converting into the PDF format, based on the image data request issued by the user.

Here, if the multifunction machine 100 is realized by an embedded system, the CPU of the embedded system functions as the format conversion unit by executing a program for at least one of the single page PDF format and the multi-page PDF format according to the image data request.

The stored data referencing unit 202 provides the image data list acquired from the multifunction machine 100 (the list showing sets of image data stored), and the format specifying screen for specifying a format of the image data to be acquired to the stored data list display/operation console 204.

The stored data list display/operation console 204 displays the format specifying screen.

Then, the user selects a desired set of the image data from the sets of the image data indicated by the list, and selects a desired format of the desired image data out of, e.g., PDF (multi-page), PDF (single page), TIFF, and JPEG formats by operating the stored data list display/operation console 204. Here, the formats described above are examples only; other formats can be made available.

When the user has specified the image data to be acquired and the desired format of the image data to be acquired, the stored data list display/operation console 204 provides the image data request to the stored data referencing unit 202.

The stored data referencing unit 202 provides the image data request to the multifunction machine 100.

Here, if the information outputting apparatus 200 is realized by an embedded system, the CPU of the embedded system functions as the format specifying unit by executing a program that specifies at least one of the single page format and the multi-page format when the PDF format is specified.

Next, the processes performed by the system including the multifunction machine 100 and the client PC 200 according to the present embodiment are described with reference to Fig. 8.

The stored data referencing unit 202 of the client PC 200 is connected to the multifunction machine 100, and issues the request of acquiring the image data list stored in the multifunction machine 100 (1).

In response to the request, the data I/F unit 102 of the multifunction machine 100 refers to the data storage 106, and returns the image data list to the stored data referencing unit 202 (2, and 3) .

The stored data referencing unit 202 provides the received image data list to the stored data list display/operation console 204. When the stored data referencing unit 202 acquires the stored data list from the multifunction machine 100, the number of pages of each set of the stored data is simultaneously acquired.

The stored data list display/operation console 204 displays the image data list to the user (4).

Then, the user selects a desired set of the image data in the image data list displayed by the stored data list display/operation console 204, where the list shows the sets of the image data stored, and issues the image data acquisition request (image data request) (5).

Further, the stored data list display/operation console 204 displays the format specifying screen for the desired image data. Here, the stored data list display/operation console 204 determines whether the desired data consist of two or more pages, and if affirmative, displays the format specifying screen for the desired image data for selecting one of the multi-page format and the single page format.

The user specifies a desired format of the desired image data on the format specifying screen. When the "OK" button is pushed, the stored data list display/operation console 204 issues the data acquisition request (image data request) that contains the format specified by the user. Here, in the case of the PDF format, the choices are the multi-pages and the single page.

The image data acquisition request is provided by the stored data list display/operation console 204 to the stored data referencing unit 202. The stored data referencing unit 202 provides the received image data acquisition request to the multifunction machine 100 (6, and 7).

When the multifunction machine 100 receives the image data acquisition request, the data I/F unit 102 provides the image data acquisition request to the format converter 104 (8), the format converter 104 acquires the requested image data from the data storage 106 (9), and the format of the image data is converted into the specified format based on the image data acquisition request. The format converter 104 provides the image data in the specified format to the stored data referencing unit 202 through the data I/F unit 102. Consequently, the image data in the specified format are provided to the data I/F unit 102 (10), and are further provided to the stored data referencing unit 202 (11).

The stored data referencing unit 202 stores the received image data in the specified format in the storage unit 206 of the client PC 200 (12).

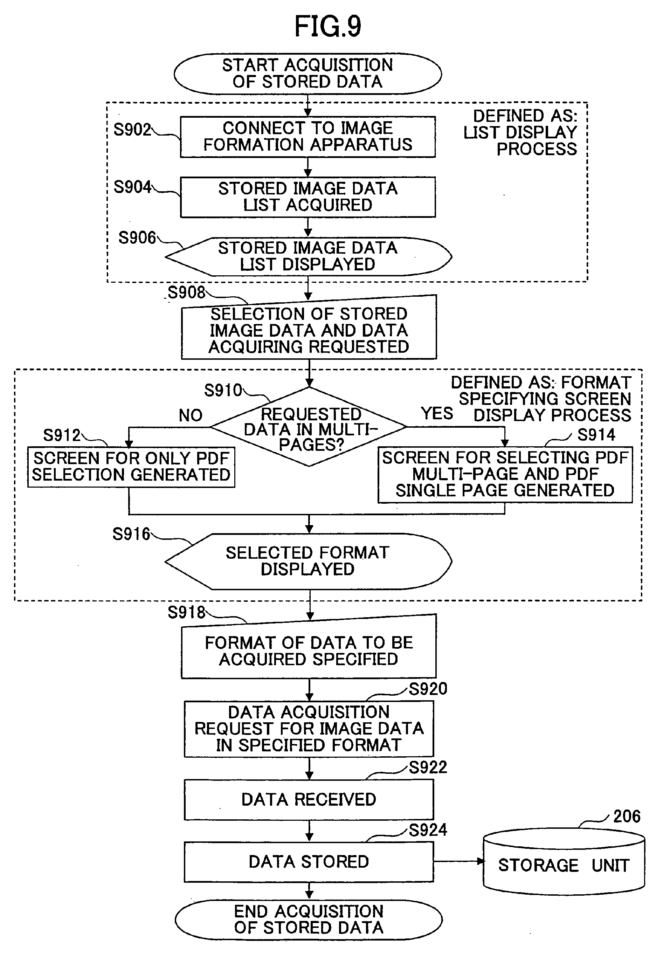

Next, operations of the system that includes the multifunction machine 100 and the client PC 200 according to the present embodiment are described with reference to Fig. 9.

At step S902, the stored data referencing unit 202 is connected to the multifunction machine 100 through the data I/F unit 102.

Next, the stored data referencing unit 202 issues the image data request to the data I/F unit 102 for acquiring the image data list stored in the multifunction machine 100. The data I/F unit 102 acquires the image data list stored in the data storage 106, and provides the image data list to the stored data referencing unit 202. When referring to the image data list stored in the data storage 106, the data I/F unit 102 simultaneously acquires the number of pages of each set of the stored image data, and provides information about the number of pages to the stored data referencing unit 202.

The stored data referencing unit 202 associates the acquired image data list with the information about the number of pages, and provides the image data list to the stored data list display/operation console 204 (step S904).

The stored data list display/operation console 204 displays the image data list (step S906).

Next, the user selects a desired set of the image data on the stored data list display/operation console 204, and the image data request is issued (step S908).

The stored data list display/operation console 204 determines whether the selected image data are in multiple pages (step S910).

If the determination is negative (NO at step S910), the screen specifying only PDF is generated (step S912). On the other hand, if the determination is affirmative (YES at step S910), a screen that allows choices between the multi-page PDF format and the single page PDF format is generated (step S914).

Next, the stored data list display/operation console 204 displays the format specifying screen for the image data to be acquired (step S916).

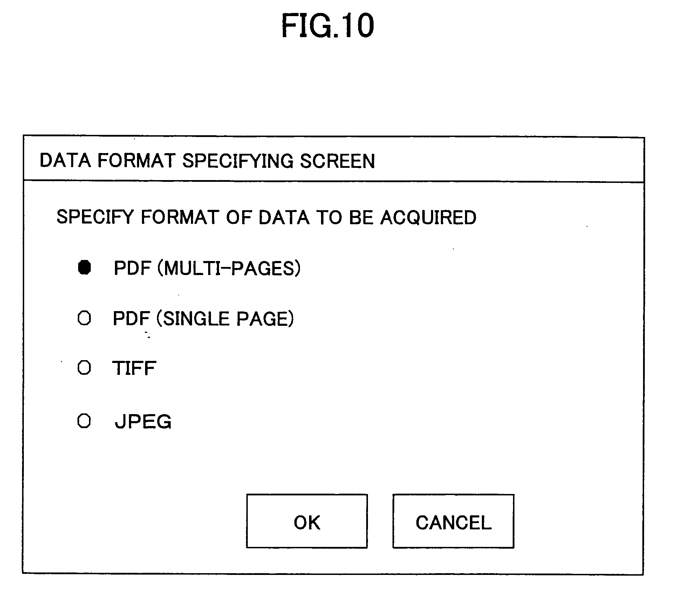

For example, the stored data list display/operation console 204 displays the screen for specifying only PDF such as shown in Fig. 7 if the specified image data are of a single page; and if the specified image data are of multiple pages, the stored data list display/operation console 204 displays a format specifying screen as shown in Fig. 10, wherein the multi-page PDF format and the single page PDF format can be selected (step S916). When the specified image data are of multiple pages, radio buttons for selecting at least one of, e.g., PDF (multi-page), PDF (single page), TIFF, and JPEG are given in the format specifying screen for the image data to be acquired as shown in Fig. 10.

Next, the user specifies a format of the image data to be acquired in the format specifying screen (step S918). For example, the user selects one of the radio buttons, namely, PDF (multi-page), PDF (single page), TIFF, and JPEG; and pushes the "OK" button. In this way, the format of the image data to be acquired is specified.

Following this operation, the stored data list display/operation console 204 issues the image data acquisition request to the stored data referencing unit 202 (step S920).

The stored data referencing unit 202 provides the image data acquisition request to the data I/F unit 102 of the multifunction machine 100. The data I/F unit 102 provides the image data acquisition request to the format converter 104. The format converter 104 requests the requested image data from the data storage 106, and acquires the requested image data. Then, the format converter 104 converts the format of the acquired image data into the specified format, and provides the format-converted image data to the data I/F unit 102. The data I/F unit 102 provides the image data in the specified format to the client PC 200.

The stored data referencing unit 202 receives the image data in the specified format from the multifunction machine 100 (step S922). The stored data referencing unit 202 stores the image data in the specified format in the storage unit 206 (step S924).

With the above, acquisition by the client PC 200 of the image data stored in the multifunction machine 100 is completed.

In the following, the steps from S902 to S906 are called a list display process, and the steps from S910 to S916 are called a format specifying screen display process for the image data to be acquired.

According to the present embodiment, the user can specify one of the single page PDF format and the multi-page PDF format when the client PC 200 acquires the image data in the PDF format if the image data are of multiple pages.

Conventionally, if the user requires the single page PDF while the image data are of multiple pages, a conversion into the single page PDF format is necessary by extracting only one page. Conversely, if the user requires the multi-page PDF format while the image data are of the single page, a conversion into the multi-page PDF is necessary using two or more single page PDF documents.

The present embodiment dispenses with the necessity described above by enabling the user to specify whether a single page PDF document is desired or a multi-page PDF document is desired, and to acquire image data in the desired format. Accordingly, the image data converted into PDF format can be used without any additional process.

The present embodiment has been described about the example wherein the single page or the multi-pages can be selected in the PDF format; nevertheless, the choice can be assigned to other formats such as TIFF and JPEG. The format converter 104 is to convert the format of the image data as specified.

Next, a system that includes the image formation apparatus and the information outputting apparatus according to the fourth embodiment of the present invention is described.

The configuration of the system according to the fourth embodiment is the same as that of the configuration described with reference to Fig. 1, and the descriptions are not repeated.

Further, the configuration of the multifunction machine 100 and the client PC 200 according to the present embodiment is the same as the configuration of the multifunction machine and the client PC shown in Fig. 8.

According to the image data request issued by the user, the format converter 104 specifies a user password, when converting the format of the image data stored in the data storage 106 into a specified format, for example, the PDF format. Here, the user password is required when opening the image data converted in the specified format, for example, the PDF format.

The data I/F unit 102 provides the image data converted into the specified format (e.g., PDF) wherein the user password is specified to the client PC 200.

Here, if the multifunction machine 100 is realized by an embedded system, the CPU of the embedded system functions as the format conversion unit according to a program for specifying the password for opening the image data in the format specified by the image data request, for example, the PDF format. Further, the CPU of the embedded system functions as the input/output unit according to a program for providing the image data in the specified format, for example, the PDF format wherein the user password is specified to the information outputting apparatus 200.

The stored data referencing unit 202 provides the image data list acquired from the multifunction machine 100 (the list showing sets of image data stored), and the format specifying screen for specifying a format of the image data to be acquired to the stored data list display/operation console 204.

The stored data list display/operation console 204 displays the provided image data list and the format specifying screen.

Then, the user selects a desired set of the image data from the list displayed by the stored data list display/operation console 204, and further selects a desired format (not limited to the PDF format) on the format specifying screen displayed by the stored data list display/operation console 204. Further, when the user specifies the PDF format by operating the stored data list display/operation console 204, the user password can be specified for the image data the format of which is to be converted into PDF. Further, it can be arranged such that the user password for opening the image data of any specified format may be specified by operating the stored data list display/operation console 204. For example, the user can specify at least one of the formats, namely, PDF (multi-page), PDF (single page), TIFF, and JPEG by operating the stored data list display/operation console 204. Nevertheless, other formats may be made available for selection.

When the user has selected the image data to be acquired, the format of the image data to be acquired, and the user password (collectively, the image data request), the stored data list display/operation console 204 provides the image data request to the stored data referencing unit 202. Then, the stored data referencing unit 202 provides the image data request that requests the image data in the specified format and is protected by the user password to the multifunction machine 100. Here, the stored data referencing unit 202 encrypts the user password and provides the encrypted user password to the multifunction machine 100.

If the information outputting apparatus 200 is realized by an embedded system, the CPU of the embedded system executes a program of the format specifying steps for specifying the user password for opening the image data in the specified format, for example, the PDF format, and executes a program of the stored data referencing steps for transmitting the user password that is encrypted.

Next, the processes carried out by the system that includes the multifunction machine 100 and the client PC 200 are described with reference to Fig. 8.

The client PC 200 is connected to the multifunction machine 100 through the stored data referencing unit 202, and issues an acquisition request of the image data list stored in the multifunction machine 100 (1).

In response to the acquisition request, the data I/F unit 102 of the multifunction machine 100 refers to the image data list stored in the data storage 106, and provides the image data list to the stored data referencing unit 202 (2, and 3).

The stored data referencing unit 202 receives the image data list and provides the same to the stored data list display/operation console 204. When the stored data referencing unit 202 receives the stored data list from the multifunction machine 100, the number of pages of each set of the stored data is simultaneously acquired.

The stored data list display/operation console 204 displays the image data list (4).

The user selects a desired set of the image data out of sets of the image data indicated by the list displayed by the stored data list display/operation console 204, and issues the image data acquisition request (image data request) (5).

Then, the stored data list display/operation console 204 displays the format specifying screen for image data acquisition. In this case, the stored data list display/operation console 204 determines whether the set of the image data to be acquired is of a single page or multiple pages, and displays the format specifying screen so that a choice may be made between the multi-page format and the single page format.

The user specifies the format of the desired image data to be acquired on the format specifying screen. When the "OK" button is pushed, the stored data list display/operation console 204 issues the data acquisition request (image data request) with the format specified by the user. In this case, in the case of the PDF format, the user can select whether the format is the multi-page or the single page, when specifying the format of the image data to be acquired on the format specifying screen. Further, the choice between the single page format and the multi-page format may be made available to formats other than PDF.

Further, when the user selects one of the PDF (multi-page) and PDF (single page), a "specify PDF details" button is displayed for selection. When the user pushes the "specify PDF details" button, a "specify PDF details" screen is displayed. On this screen, the user can specify the user password. Further, an arrangement can be made such that the user password may be available in a format other than PDF. For example, when the user selects a format other than PDF, a "specify details" button is displayed. Furthermore, when the user pushes the "specify details" button, a "specify details" screen is displayed. On this screen, the user can specify the user password. The "specify details" screen is configured similar to the "specify PDF details" screen.

When PDF is specified as the format of the image data to be acquired, the user password is specified on the "specify PDF details" screen, and the "OK" button is pushed on the "Format specifying screen", the stored data list display/operation console 204 issues a PDF image data acquisition request with the details (i.e., the user password) specified as the image data acquisition request (image data request). Further, if a format other than PDF is specified as the format of the image data to be acquired, and the user password is specified on the "details specifying screen", the stored data list display/operation console 204 issues the image data acquisition request with the user password as an image data acquisition request (image data request).

The image data acquisition request is provided to the stored data referencing unit 202 from the stored data list display/operation console 204. The stored data referencing unit 202 receives the image data acquisition request and provides the image data acquisition request to the multifunction machine 100 (6, and 7).

Since the user password is contained in the image data acquisition request provided by the client PC 200 to the multifunction machine 100, there is concern that the user password may be revealed to a third party if the communication data between the client PC 200 and the multifunction machine 100 are monitored by the third person. In order to avoid this, the stored data referencing unit 202 encrypts the user password that can be decrypted by the multifunction machine 100 when transmitting the image data acquisition request with the user password.

The data I/F unit 102 of the multifunction machine 100 receives the image data acquisition request and the encrypted user password, decrypts the user password, and provides the image data acquisition request to the format converter 104 (8). Then, the format converter 104 acquires the requested image data from the data storage 106 (9) and converts the image data into the specified format based on the image data acquisition request.

If the PDF format is specified and the user password is specified, the format converter 104 converts the image data into PDF for which the user password is set. Further, if a format other than the PDF format is specified and the user password is specified, the format converter 104 converts the image data into the specified format for which the user password is specified.

The format converter 104 provides the image data in the specified format to the stored data referencing unit 202 through the data I/F unit 102. Consequently, the image data in the specified format are provided to the data I/F unit 102 (10), and are then provided to the stored data referencing unit 202 (11).

The stored data referencing unit 202 receives the image data and stores the same in the storage unit 206 of the client PC 200 (12).

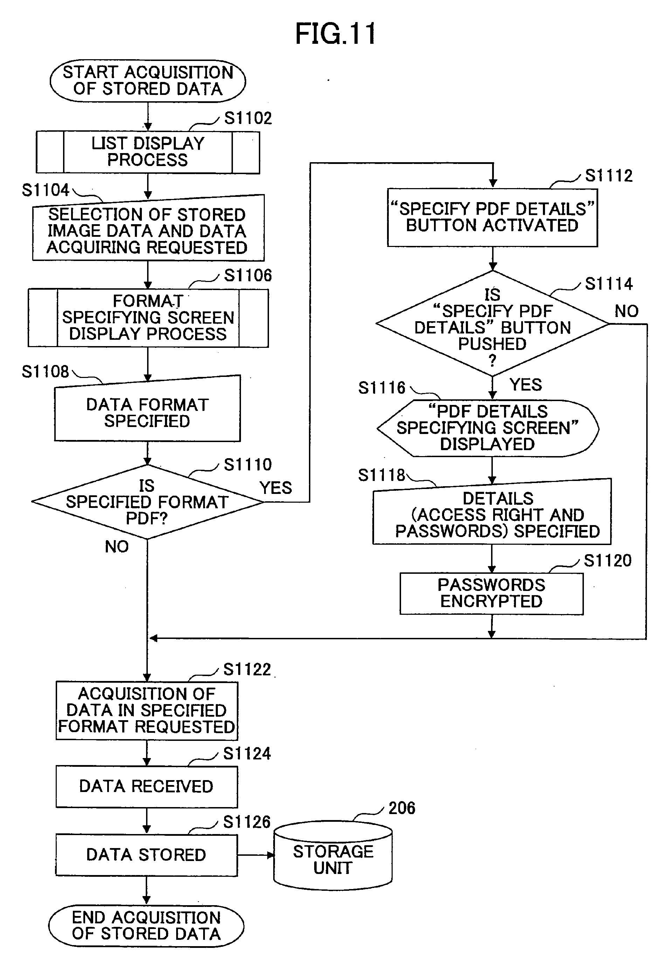

Next, operations of the system that includes the multifunction machine 100 and the client PC 200 according to the present embodiment are described with reference to Fig. 11.

At step S1102, the list display process is performed.

Next, at step S1104, the user performs the image data selection operation and the image data acquisition request operation on the stored data list display/operation console 204.

Next, at step S1106, the format specifying screen display process of specifying the format of the image data to be acquired is performed.

Next, at step S1108, the user specifies the format of the image data to be acquired according to the format specifying screen. For example, the user selects at least one of the radio buttons for PDF (multi-page), PDF (single page), TIFF, and JPEG. Then, the "OK" button is pushed. In this way, the format of the image data to be acquired is specified. Here, formats other than described above may be included.

Next, at step 1110, the stored data list display/operation console 204 determines whether the specified format is the PDF format.

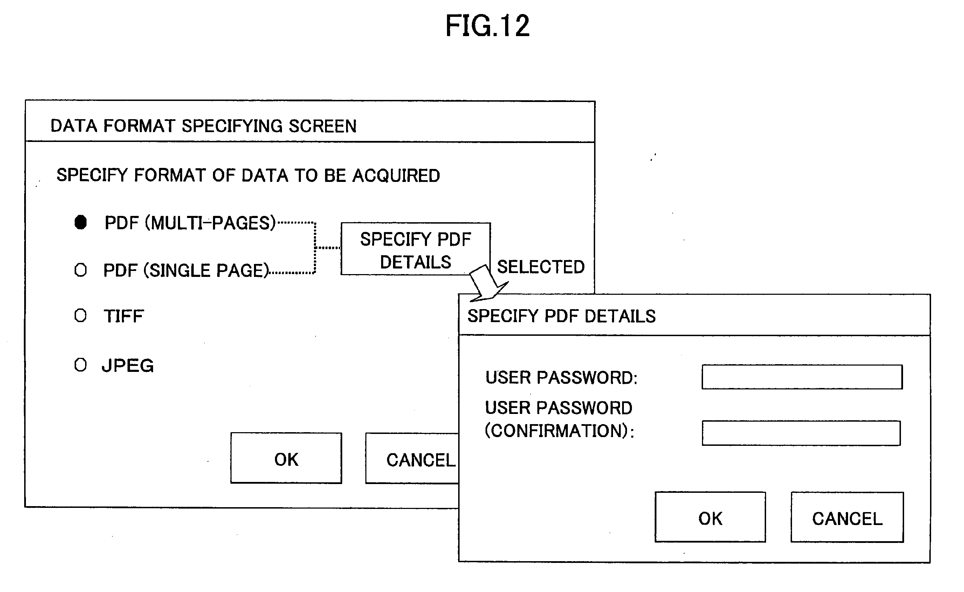

If the specified format is the PDF format (YES at step S1110), the stored data list display/operation console 204 displays "specify PDF details" button for selection at step S1112. For example, as shown in Fig. 12, if the PDF format is selected as the format of the image data to be acquired, the "specify PDF details" button is displayed for selection.

Next, at step S1114, the stored data list display/operation console 204 determines whether the "specify PDF details" button is selected.

If the "specify PDF details" button is selected (step S1114: YES), the stored data list display/operation console 204 displays the "specify PDF details" screen at step 1116. For example, the stored data list display/operation console 204 displays the screen for inputting the user password as the "specify PDF details" screen.

Next, at step S1118, the user specifies details, for example, the right to access, and a password such as the user password with reference to the "specify PDF details" screen.

Next, at step S1120, the stored data referencing unit 202 encrypts the password(s), for example, the user password.

On the other hand, if the determination at step S1110 is negative, i.e., if the specified format is not PDF (NO at step S1110), the process proceeds to step S1122. Further, if the determination at step S1114 is negative, i.e., the "specify PDF details" is not selected (NO at step S1114), the process proceeds to step S1122. Further, when the password(s) are encrypted at step S1120, the process proceeds to step S1122. At step S1122, the stored data list display/operation console 204 issues the image data acquisition request in the specified format to the stored data referencing unit 202.

The stored data referencing unit 202 provides the image data acquisition request to the data I/F unit 102 of the multifunction machine 100 according to the image data acquisition request issued by the stored data list display/operation console 204. If the user password encrypted is contained in the image data acquisition request, the data I/F unit 102 decrypts the user password, and provides the image data acquisition request to the format converter 104.

The format converter 104 acquires the requested image data from the data storage 106. Further, the format converter 104 converts the image data into the specified format, and the converted data are provided to the data I/F unit 102. Here, if the user password is specified, the format converter 104 converts the image data into the PDF format for which the specified user password is set, and provides the image data to the data I/F unit 102.

The data I/F unit 102 provides the image data in the specified format to the client PC 200.

The stored data referencing unit 202 receives the image data in the specified format provided by the multifunction machine 100 at step S1124. The stored data referencing unit 202 stores the received image data in the storage unit 206 at step S1126.

With the above, acquisition of the image data stored at the multifunction machine 100 is completed.

As described above, according to the present embodiment, when acquiring the image data stored in the multifunction machine 100 in the PDF format, the password is attached to the image data in the PDF format, which password is required for opening the file, i.e., the PDF files that are encrypted can be acquired.

According to a process of encrypting a communication path, for example, SSL, (Secure Socket Layer), an encrypting process and a decrypting process are required of the multifunction machine 100 and the client PC 200. In this case, all the exchanges of the image data have to be encrypted and decrypted; for this reason, the process takes time compared with the case where the communication path is not encrypted. Further, even if the communication path is encrypted and the data are protected between the multifunction machine 100 and the client PC 200, the image data (e.g., in the PDF format) stored in the client PC 200 are subject to access by a third party.

Further, even if the client PC 200 uses a tool such that a password is attached to the PDF file to protect the image data, the PDF file can be accessed by the third party until the encryption is completed.

Further, if a password for the PDF file has to be attached at the time of scanning when the multifunction machine 100 acquires an image, it takes time and effort. Further, if a password is not required, it will be necessary to remove a password at the client PC 200, and this takes time and effort.

According to the present embodiment, the user password for the user to open the PDF file is specified as required at the time of data acquisition, and the PDF file with the password (encrypted PDF file) is generated and transmitted by the multifunction machine 100. The client PC 200 can acquire the encrypted PDF file. Since the communication path does not have to be encrypted, the process for encrypting and decrypting the communication path becomes unnecessary.

Further, the PDF file cannot be opened without the password, since the password is already attached to the PDF file when it is acquired and stored in the client PC 200. Further, since the password is attached as required at the time of data acquisition, the time and effort when scanning is dispensed with, and the time and effort of canceling the password by the client PC is dispensed with.

At step S1110, if the specified format is not PDF, the following process may be carried out.

The stored data list display/operation console 204 provides the "specify details button". For example, in the format specifying screen shown in Fig. 12, the "specify details" button is provided to the formats other than the PDF format, namely, for example, TIFF, and JPEG; and the "specify details" button is available for selection.

Then, the stored data list display/operation console 204 determines whether the "specify details" button is selected.

If the "specify details" button is pushed, the stored data list display/operation console 204 displays the "details specifying screen". The "specify details" screen is the same as the "specify details" screen for the PDF format. That is, the stored data list display/operation console 204 displays the screen for inputting the user password as the "details specifying screen".

Then, the user specifies details, for example, the right to access, and a password for each access, for example, the user password, with reference to the "details specifying screen".

Then, the stored data referencing unit 202 encrypts the password, for example, the user password. Then, the processes after step S1122 are performed.

Next, a system constituted by the image formation apparatus 100 and the information outputting apparatus 200 according to the fifth embodiment of the present invention is described.

The configuration of the system according to the fifth embodiment of the present invention is the same as that of the configuration described with reference to Fig. 1, and descriptions are not repeated.

Further, the configuration of the multifunction machine 100 and the client PC 200 according to the present embodiment is the same as the configuration of the multifunction machine 100 and the client PC 200 shown in Fig. 8.

According to the image data request issued by the user, the format converter 104 specifies a master password when converting the format of the image data stored at the data storage 106 into the PDF format. Here, the master password is required when specifying and modifying at least one of security information, editing, and printing of the image data in the PDF format. Further, when the image data stored in the data storage 106 are to be converted into a format other than the PDF format, the format converter 104 can be configured such that the master password is specified according to the image data request of the user. In this case, the master password is required when specifying and modifying at least one of security information, editing, and printing of the image data in a format other than the PDF format.

Further, the format converter 104 can be configured such that authority options are made available when the PDF format with the master password is specified. The authority options include authority for "printing", "modifying", and "copying and extraction of contents". Further, the authority options for a format other than PDF may be made available.

Further, when the PDF format with the master password is specified, the format converter 104 may be arranged such that an encryption level is specified according to the request from the user. The encryption level is for differentiating security levels, and authority is provided according to the security level. Further, when a format other than the PDF format with the master password is specified, the format converter 104 may be arranged such that the encryption level is specified according to the request from the user.

Further, when the PDF format with the master password is specified and the encryption level is specified, the format converter 104 can be arranged such that the authority option may be specified for specifying the encryption level according to the request from the user. Further, when a format other than the PDF format with the master password is specified and the encryption level is specified, the format converter 104 specifies the authority option for specifying the encryption level according to the request from the user.

For example, for a low encryption level, accessibility is denied, authority is not granted for printing, modification of a document, copying, and extraction of contents; and authority is granted for addition and modification of notes and a form field. Further, for a high encryption level, accessibility is granted, and authorities for copying and extraction of the contents, modification of the document, and printing are granted. Here, as for the authority of document modification, parameters are available, such as no modification is allowed, only assembling documents is permitted, inputting to the form field is permitted, a signature is permitted, generation of the form field is permitted, and editing and note insertion are permitted. Further, as for the authority for printing, available parameters are such as printing is not permitted, printing in a low resolution is permitted, and printing is fully permitted.

The data I/F unit 102 provides the image data in the PDF format with the authority option and the master password and/or the image data in a format other than the PDF format to the client PC 200.

If the multifunction machine 100 is realized by an embedded system, the CPU of the embedded system functions as the format conversion unit according to a program, which program is for specifying the master password for specifying at least one of security information, editing, and printing of the image data in the PDF format and/or in a format other than the PDF format according to the image data request. The CPU of the embedded system further functions as the input/output unit according to a program, which program is for providing the image data in the PDF format with the master password and/or a format other than the PDF format to the information outputting apparatus.

Further, the CPU of the embedded system can be arranged to function as the format conversion unit according to a program, which program is for printing, editing, and modifying/generating security information of the image data in the PDF format and/or a format other than the PDF format according to the image data request.

Further, the CPU of the embedded system can be arranged to function as the format conversion unit according to a program, which program is for specifying the encryption level of the image data in the PDF format and/or a format other than the PDF format according to the image data request.

Further, the CPU of the embedded system can be arranged to function as the format conversion unit according to a program, which program is for printing, editing, and modifying/generating security information of the image data in the PDF format and/or a format other than the PDF format according to the image data request.

The stored data referencing unit 202 provides the image data list acquired from the multifunction machine 100 and the format specifying screen for specifying a format of the image data to be acquired to the stored data list display/operation console 204.

The stored data list display/operation console 204 displays the image data list and the format specifying screen.

Then, the user selects a desired set of the image data from the image data list, and specifies a desired format (not limited to PDF) by operating the stored data list display/operation console 204. If the user specifies the PDF format by operating the stored data list display/operation console 204, a user password and a master password can be specified to be attached to the image data converted into PDF. For example, the user can specify at least one of the formats, namely, PDF (multi-page), PDF (single page), TIFF, and JPEG by operating the stored data list display/operation console 204. Here, other formats may be offered for selection. Further, when the user specifies a desired format other than the PDF format by operating the stored data list display/operation console 204, the master password may be specified in addition to the user password that is to be attached to the image data converted into the desired format.

When the user has specified the image data, the desired format of the image data to be acquired, the user password, and the master password, the stored data list display/operation console 204 provides the image data request to the stored data referencing unit 202.

Here, if The PDF format with the master password is specified, the stored data list display/operation console 204 can provide the authority option concerning, e.g., "printing", "modifying", and "copying and extraction of the contents". Further, if a format other than the PDF format with the master password is specified, the stored data list display/operation console 204 can be arranged to provide the authority option as applicable to the specified format.

Further, the stored data list display/operation console 204 may be arranged to provide the encryption level, when the PDF format with the master password is specified. Further, the stored data list display/operation console 204 may be arranged to provide the encryption level, when a format other than the PDF format with a master password is specified.

Further, the stored data list display/operation console 204 may provide the authority option applicable to the encryption level, when the PDF format with the master password is specified and the encryption level is specified. Further, the stored data list display/operation console 204 may provide the authority option applicable to the encryption level, when a format other than the PDF format with the master password is specified and the encryption level is specified.

In this case, the stored data referencing unit 202 provides the image data request to the multifunction machine 100, the request indicating that the image data are requested in the specified format with the user password and the master password attached. Then, the stored data referencing unit 202 encrypts the user password and the master password, and provides the encrypted passwords to the multifunction machine 100.

If the multifunction machine 100 is realized by an embedded system, the CPU of the embedded system functions as the format specifying unit according to a program, which program is for specifying the master password for specifying and modifying at least one of security information, editing, and printing of the image data in the PDF format and/or a format other than the PDF format. The CPU of the embedded system further functions as the stored data reference unit according to a program, which program is for encrypting and providing the master password.

Further, when the CPU of the embedded system functions as the format specifying unit according to a program, the program may be for specifying at least one of security information, editing, and printing of the image data in the PDF format and/or a format other than the PDF format.

Further, when the CPU of the embedded system functions as the format specifying unit according to a program, which program is for specifying the encryption level for the image data in the PDF format and/or a format other than the PDF format.

Further, when the CPU of the embedded system functions as the format specifying unit according to a program, which program is for specifying at least one of security information, editing, and printing of the image data in the PDF format and/or a format other than the PDF format according to the encryption level.

Next, processes carried out by the system that includes the multifunction machine 100 and the client PC 200 are described with reference to Fig. 8.

The stored data referencing unit 202 of the client PC 200 is connected to the multifunction machine 100, and issues a request to acquire the image data list to the multifunction machine 100 (1).

The multifunction machine 100 receives the request, and in response to the request, the data I/F unit 102 refers to the data storage 106 and provides the image data list stored to the stored data referencing unit 202 (2, and 3).

The stored data referencing unit 202 receives the image data list and provides the same to the stored data list display/operation console 204. When the stored data referencing unit 202 receives the image data list from the multifunction machine 100, the number of pages of each set of the stored data is simultaneously acquired.

The stored data list display/operation console 204 displays the image data list to the user (4).

The user selects a desired set of the image data out of the sets of image data shown by the list displayed on the stored data list display/operation console 204, and issues the image data acquisition request (image data request) (5).

Further, the stored data list display/operation console 204 displays the format specifying screen for the image data to be acquired. In this case, the stored data list display/operation console 204 determines whether the image data to be acquired are of multiple pages or of a single page, and displays the format specifying screen for the user to select one of the multi-page format and the single page format.

The user specifies a desired format of the image data to be acquired to acquire on the format specifying screen. When the "OK" button is pushed, the stored data list display/operation console 204 issues the data acquisition request as image data (image data request) with the format specified by the user. In this case, if the PDF format is specified, the user can select between the multi-page format and the single page format. Further, the choice between the multi-page format and the single page can be made available to a format other than the PDF format.

When the user selects one of PDF (multi-page) and PDF (single page), a "specify PDF details" button is displayed for selection. When the user pushes the "specify PDF details" button, the "specify PDF details" screen is displayed. On this screen, the user can specify the user password and the master password. Further, it can be arranged such that the "specify details" button is displayed for selection when the user selects one of the multi-page format and the single page format for a format other than PDF. In this case, when the user pushes the "specify details button", the "specify details" screen is displayed; and on this screen, the user can specify the user password and the master password.

Further, it can be arranged such that the user may specify an authority option in the "specify PDF details" screen. Further, it can be arranged such that the user may specify the authority option in the "details specifying screen".

Further, an arrangement can be made such that the user may specify the encryption level in the "specify PDF details" screen. Further, if the encryption level is specified in the "specify PDF details" screen, an arrangement can be made such that the user may specify the authority option according to the encryption level. Further, an arrangement can be made such that the user may specify the encryption level in the "details specifying screen". Further, if the encryption level is specified in the "details specifying screen", an arrangement can be made such that the authority option may be specified according to the encryption level.

When the PDF format is specified as the format of the image data to be acquired, the user password and the master password are specified in the "PDF details specifying screen", and the "OK" button is pushed in the "format specifying screen", the stored data list display/operation console 204 issues the PDF image data acquisition request (image data request) with the details (i.e., the user password and the master password) specified. Further, if a format other than the PDF format is specified as the format of the image data to be acquired, the user password and the master password are specified in the "details specifying screen", "OK" button is pushed in the format specifying screen, the stored data list display/operation console 204 issues the image data acquisition request (image data request) with the details (i.e., the user password and the master password) specified.

The image data acquisition request issued by the stored data list display/operation console 204 is provided to the stored data referencing unit 202. The stored data referencing unit 202 provides the received image data acquisition request to the multifunction machine 100 (6, and 7).

Since the user password and the master password are contained in the image data acquisition request provided by the client PC 200 to the multifunction machine 100, the passwords contained in communication data between the client PC 200 and the multifunction machine 100 are subject to monitoring by a third person. In order to avoid revealing the passwords, the user password and the master password are encrypted by the stored data referencing unit 202 and decrypted by the multifunction machine 100.

Further, if the user specifies the authority option in the "specify PDF details" screen, contents of the authority option are included in the image data acquisition request. Further, if the user specifies the authority option in the "details specifying screen", contents of the authority option are included in the image data acquisition request.

Further, if the user specifies the encryption level in the "specify PDF details" screen, contents of the encryption level are included in the image data acquisition request. Furthermore, if the user specifies the authority option according to the encryption level in the "specify PDF details" screen, the contents of the authority option according to the encryption level are included in the image data acquisition request. Further, if the user specifies the encryption level in the "details specifying screen", contents of the encryption level are included in the image data acquisition request. Furthermore, if the user specifies the authority option according to the encryption level in the "details specifying screen", contents of the authority option according to the encryption level are included in the image data acquisition request.

The multifunction machine 100 receives the image data acquisition request, the data I/F unit 102 decrypts the user password and master password that are encrypted, the image data acquisition request is provided to the format converter 104 (8), and the format converter 104 acquires the requested image data from the data storage 106 (9) and converts the image data into the specified format based on the image data acquisition request.

In the case where the PDF format, the user password, and the master password are specified, the format converter 104 converts the image data into the PDF format wherein the user password and the master password are specified. In the case where the user password and the master password are specified while a format other than PDF is specified, the format converter 104 converts the image data into the specified format wherein the user password and the master password are specified. Here, the authority option is specified if the user specifies the authority option. Further, if the user specifies the encryption level, the encryption level as specified is used. Furthermore, if the user specifies the authority option according to the encryption level, the authority option according to the encryption level is specified.

The format converter 104 provides the image data in the specified format to the stored data referencing unit 202 through the data I/F unit 102. Consequently, the image data in the specified format are provided to the data I/F unit 102 (10), and are then provided to the stored data referencing unit 202 (11).

The stored data referencing unit 202 receives the image data, and stores the received image data in the storage unit 206 of the client PC 200 (12).

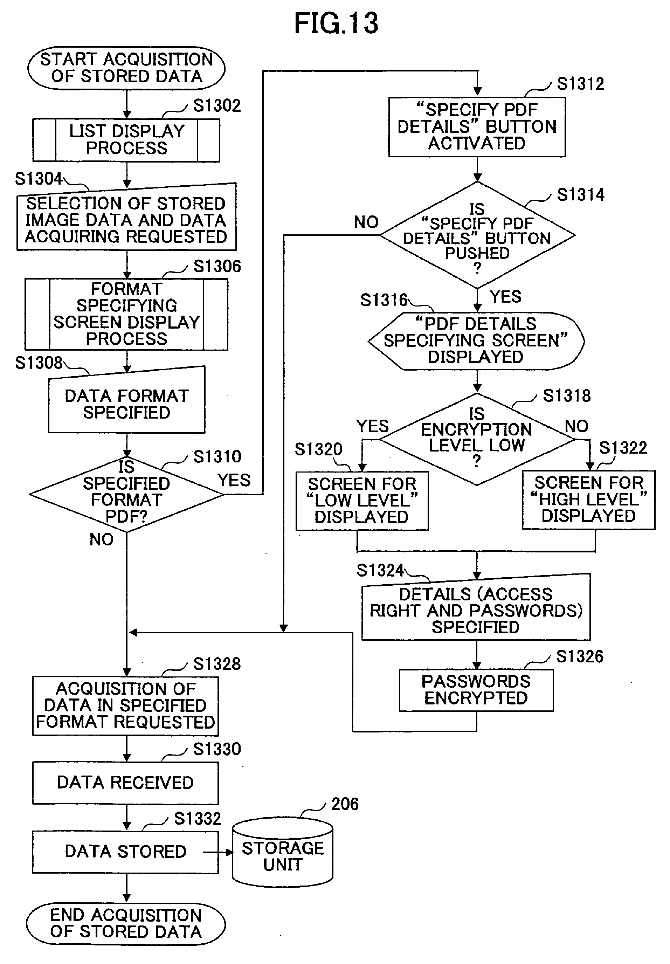

Next, operations of the system that includes the multifunction machine 100 and the client PC 200 according to the present embodiment are described with reference to Fig. 13.

At step S1302, the list display process is performed.

Next, at step S1304, the user selects a desired set of the image data on the stored data list display/operation console 204 and the image data acquisition request is issued.

Next, at step S1306, the format specifying screen display process for the desired image data is performed.

Next, at step S1308, the user specifies a desired format of the image data to be acquired according to the format specifying screen. For example, the user selects at least one of radio buttons associated with PDF (multi-page), PDF (single page), TIFF, and JPEG. Then, the "OK" button is pushed. The format of the image data to be acquired is specified in this way. Here, other formats may be made available for selection.

Next, at step 1310, the stored data list display/operation console 204 determines whether the specified format is the PDF format.

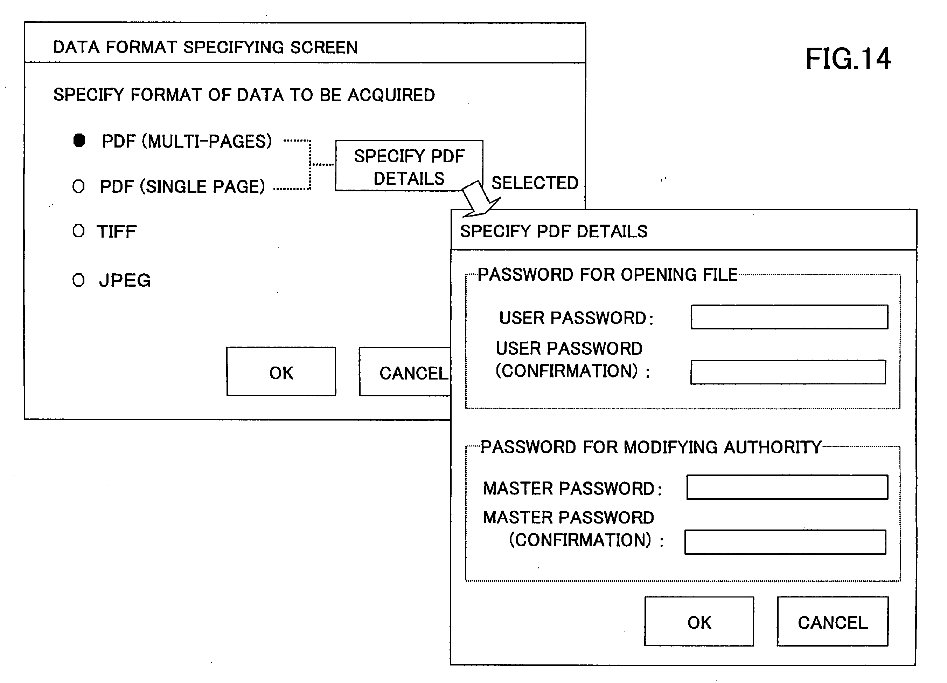

If the specified format is the PDF format (YES at step S1310), the stored data list display/operation console 204 provides the "specify PDF details" selection button at step S1312. If the PDF format is selected as the format of the data to be acquired, the "specify PDF details" selection button is provided as shown in Fig. 14 for example.

Next, the stored data list display/operation console 204 determines whether the "specify PDF details" button is pushed at step S1314.

If the "specify PDF details" button is pushed (YES at step S1314), the stored data list display/operation console 204 displays the "specify PDF details" screen at step 1316. The stored data list display/operation console 204 displays a screen for inputting the user password and the master password as the "specify PDF details" screen as shown in Fig. 14 for example.

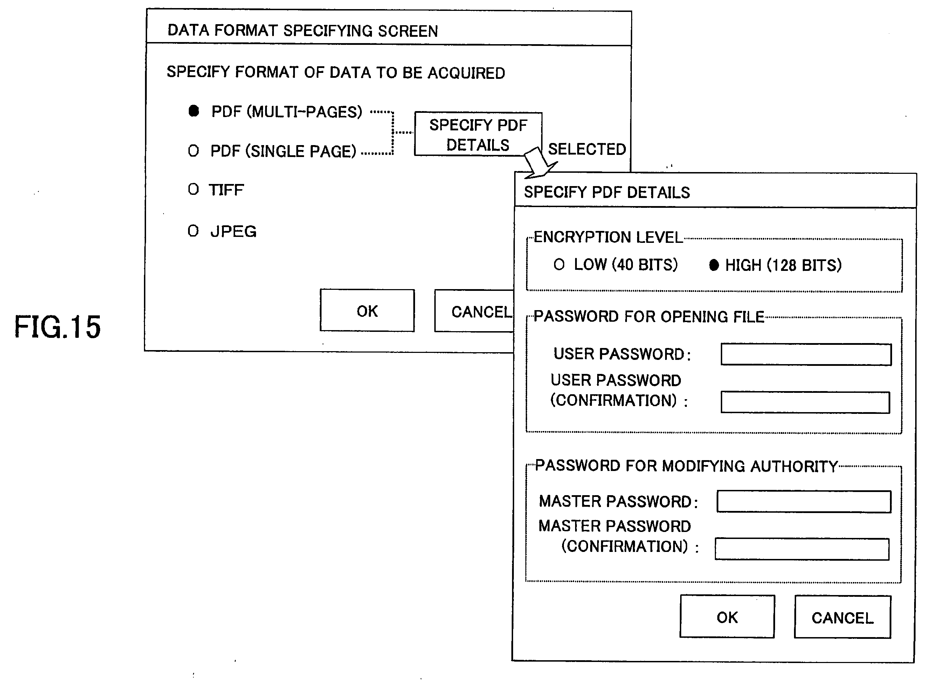

Further, the stored data list display/operation console 204 may display a screen for specifying the encryption level as the "specify PDF details" screen as shown in Fig. 15 in addition to the screen for inputting the user password and the master password.

Here, the case wherein the encryption level is specified in addition to the user password and the master password is described.

Next, the user specifies the encryption level with reference to the "specify PDF details" screen.

Next, at step S1318, the stored data referencing unit 202 determines whether the encryption level specified by the user is of a low security level (40-bit) or a high security level (120-bit).

If the encryption level is of the low security level (YES at step 1318), the stored data list display/operation console 204 displays a screen for the low security level at step S1320.

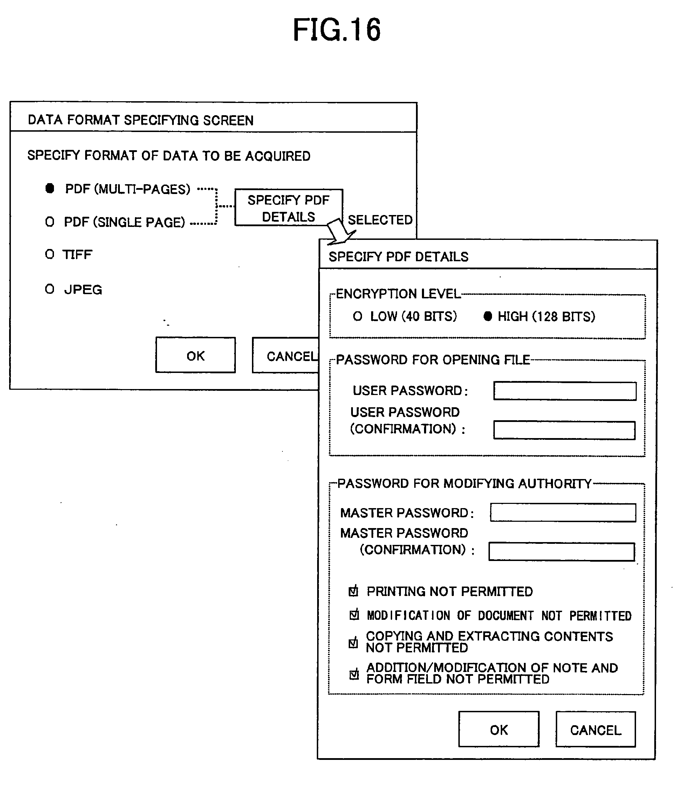

For example, the stored data list display/operation console 204 provides the "specify PDF details" screen as shown in Fig. 16, where the detailed authority option can be specified for the PDF format, for example, permitting or not permitting "printing", "updating", and "copying and extraction of contents" in addition to inputting the user password, the master password, and the encryption level. For example, the stored data list display/operation console 204 provides the screen as shown in Fig. 16 for specifying whether "printing is not permitted", "modification of document is not permitted", "copying and extraction of contents are not permitted", and "addition and modification of notes and form field are not permitted".

On the other hand, if the encryption level specified is of the high security level (NO at step 1318), the stored data list display/operation console 204 displays a screen for the high security level at step S1322.

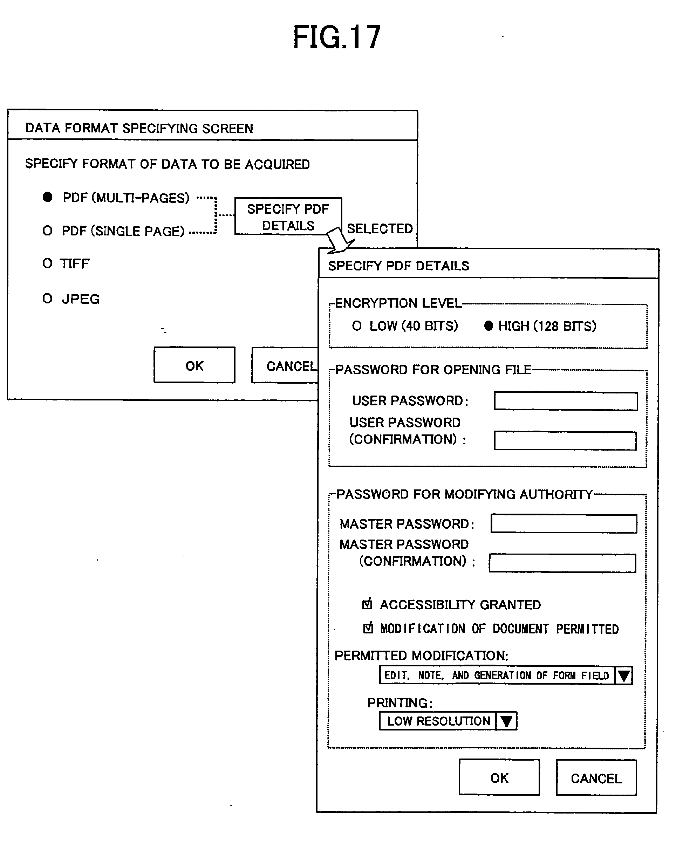

For example, in addition to the screen for inputting the user password, the master password, the encryption level, and the detailed authority option that can be specified to the PDF format, the stored data list display/operation console 204 displays a screen for specifying the authority option that can be specified according to the encryption level as the "specify PDF details" screen as shown in Fig. 17. For example, the stored data list display/operation console 204 displays a screen as shown in Fig. 17 for specifying whether "accessibility is permitted", and "copying and extraction of contents are permitted". Further, as for "copying and extraction of contents are permitted", a screen for specifying details for permitting modifications, e.g., "editing, note insertion, and generation of a form field" and for specifying detailed printing instructions such as "low resolution" is displayed.

Next, at step S1324, the user specifies details, for example, the right to access, the user password, and the master password with reference to the "specify PDF details" screen.

Next, at step S1326, the stored data referencing unit 202 encrypts the user password and the master password.

On the other hand, if the specified format is not PDF (NO at step S1310), if the "specify PDF details" button is not selected at step S1314 (NO at step S1314), or if the passwords are encrypted at step S1326, the stored data list display/operation console 204 issues the data acquisition request in the specified format to the stored data referencing unit 202 according to this operation at step S1328.

The stored data referencing unit 202 provides the image data acquisition request to the data I/F unit 102 of the multifunction machine 100 according to the image data acquisition request from the stored data list display/operation console 204. When the image data acquisition request includes the user password and the master password that are encrypted, the data I/F unit 102 decrypts the user password and the master password, and provides the image data acquisition request to the format converter 104.

The format converter 104 requests the image data from the data storage 106, and acquires the image data. Further, the format converter 104 converts the acquired image data into the specified format, and provides the converted image data to the data I/F unit 102. Here, when the user password and the master password are specified, the format converter 104 converts the image data into the PDF format wherein the user password and the master password are specified, and provides the converted image data to the data I/F unit 102. Further, if the authority option is specified, the format converter 104 specifies the authority option. Further, if the encryption level is specified, the encryption level is specified. Furthermore, if the authority option according to the encryption level is specified, the authority option according to the encryption level is specified.

The data I/F unit 102 provides the image data in the specified format to the client PC 200.

The stored data referencing unit 202 receives the image data in the specified format from the multifunction machine 100 at step S1330. The stored data referencing unit 202 stores the received image data in the storage unit 206 at step S1332.

With the above, acquisition by the client PC 200 of the image data stored in the multifunction machine 100 is completed.

According to the present embodiment, the image data stored in the multifunction machine 100 can be acquired in the PDF format, wherein the user can specify a password (master password) required when modifying the authority and the password.

Further, the client PC 200 is not required to provide a tool for attaching a master password, but the PDF file to which the master password required when modifying the authority and password is attached can be acquired.

Further, when acquiring the data in the PDF format with the master password, the user can specify the encryption level as required. In this way, the user can acquire the PDF file of the encryption level. Thus, since the encryption level can be specified, the PDF file to which an authority option is attached can be acquired.

Further, when acquiring the data in the PDF format to which the master password is attached, the user can specify a detailed authority option, for example, "printing is not permitted", "updating is not permitted", "copying and extraction of contents are not permitted", "generation of notes, inputting the form field, and modification of a signature are not permitted". These options can be specified for PDF.

The user can acquire the PDF data wherein the authority option is specified, such as "printing is permitted/not permitted", "updating is permitted/not permitted", and "copying and extraction of contents are permitted/not permitted" that can be specified for the PDF data when acquired. Since the PDF data with the authority option specified can be acquired, the PDF data can be protected as required.

When the encryption level is specified and the data in the PDF format are acquired, the authority option according to the encryption level can be specified; for example,
"page layout, inputting the form field, and addition of a signature are permitted/not permitted" where the encryption level is the low security level (40-bit), and
"page insertion, deletion, rotation, and generation of thumbnail are permitted/not permitted" where the encryption level is the high security level (128-bit).

In this way, the user can specify the authority option according to the encryption level; and a wide choice of the authority option is available for the user to acquire the PDF data.

At step S1310 of the present embodiment, when the specified format is not PDF, the following process may be carried out.

The stored data list display/operation console 204 provides the "specify details" button for selection. For example, in the format specifying screen for acquiring the image data shown in Fig. 14, it corresponds to formats other than a PDF format, for example, the "specify details button" is provided for TIFF, and JPEG for selection.

Next, the stored data list display/operation console 204 determines whether the "specify details" button is selected.

If the "specify details" button is selected, the stored data list display/operation console 204 displays the corresponding "specify details" screen. The "specify details" screen is the same as the "specify details" screen for PDF. That is, the stored data list display/operation console 204 displays the screen for inputting the user password and the master password as the "specify details" screen as shown in Fig. 14.

Further, the stored data list display/operation console 204 may be arranged to display the screen for specifying the encryption level in addition to the screen for inputting the user password and the master password as the "specify details" screen that is similar to the "specify PDF details" screen shown in Fig. 15.

Here, the case wherein the encryption level is specified in addition to the user password and the master password is described.

Next, the user specifies the encryption level according to the "details specifying screen".

Next, the stored data referencing unit 202 determines whether the specified encryption level is the low security level (40-bit), or the high security level (120-bit). The encryption level herein is an example and can be suitably defined.

The stored data list display/operation console 204 displays a screen in the case of the encryption level being the low security level.

For example, the stored data list display/operation console 204 displays the "specify PDF details" screen as shown in Fig. 16 for the user to specify the detailed authority option in addition to the screen for inputting the passwords and the encryption level. The detailed authority option includes selections between permission and prevention of "printing", "updating", "copying and extraction of contents". For example, the stored data list display/operation console 204 displays the screen as shown in Fig. 16 for selecting desired ones of "printing is not permitted", "modification of document is not permitted", "copying and extraction of contents are not permitted", "addition and modification of notes and the form field are not permitted".

On the other hand, if the encryption level is the high security level, the stored data list display/operation console 204 displays the screen in the case of the encryption level being the high security level.

For example, the stored data list display/operation console 204 displays the screen for specifying the authority option according to the encryption level in addition to the screen for inputting the user password, the master password, the encryption level, and the detailed authority option that can be specified for PDF as the "specify details" screen like the "specify PDF details" screen shown in Fig. 17. For example, the stored data list display/operation console 204 shows the screen as shown in Fig. 17 wherein the authority such as "access is permitted" and "copying and extraction of the contents are permitted" can be specified. Further, if the "copying and extraction of contents are permitted", a details specifying screen for specifying the permitted modification is displayed, wherein, for example "edit, notes, and generation of the form field", and printing specifications, e.g., specifying "low resolution" are specified.

Next, the user specifies details, for example, the right to access, and the password such as the user password and the master password with reference to the "details specifying screen".

Next, the stored data referencing unit 202 encrypts the user password and the master password. Then, steps S1328 and on are performed.

In this way, the user can specify the password (master password) required for the authority and password change when the image data stored in the multifunction machine 100 are acquired.

Further, the client PC 200 is not required to provide a tool for specifying the master password to, but the file in the specified format with the master password required for the authority and password change can be obtained.

Further, when the data in the specified format with the master password are acquired, the user can specify the encryption level. The user can acquire the file in the format at the specified encryption level as required. Thus, since the encryption level can be specified, the file in the specified format with the authority option attached can be acquired.

Further, when acquiring the data in the specified format with the master password attached, The user can specify the detailed authority option, for example, "printing is not permitted", "updating is not permitted", "copying and extraction of contents are not permitted", and "generation of notes, inputting of the form field, and change of a signature are not permitted".

When acquiring the data, the user can specify the authority option such as "printing is permitted/not permitted", "updating is permitted/not permitted", and "copying and extraction of contents are permitted/not permitted". Since the data in the specified format with the specified authority option are acquired, the security of the data in the specified format can be strengthened as required.

When the data in the format with the specified encryption level are acquired,
the authority option according to the encryption level, e.g., whether "page layout, input to the form field, and addition of a signature" are permitted can be specified if the encryption level is the low security level (40-bit), and
whether "page insertion, deletion, rotation, and generation of thumbnail" are permitted can be specified if the encryption level is the high security level (128-bit).

In this way, since the user can specify the authority option according to the encryption level, the data in the specified format are acquired with the wide choice of the authority option according to the encryption level.

Although the embodiments are described about the cases wherein the image data are directly required of the multifunction machine 100 by the client PC 200, a server including the format converter as included by the multifunction machine 100 can serve the purpose, i.e., the image data can be provided by the server. In this case, the server is connected to the multifunction machine 100 and the client PC 200 through the communication line 50.

Further, the server acquires the image data requested by the client PC 200 from the multifunction machine 100, converts the image data into the format specified by the request from the client PC 200, and the converted image data are provided to the client PC 200.

By doing in this way, the processing load of the multifunction machine 100 is mitigated.

Further, the embodiments are described about the case wherein the image formation apparatus is a multifunction machine; however, the image formation apparatus can be other apparatuses that are capable of storing image data, for example, facsimile apparatuses, printers, and image processing apparatuses.

### [Availability on industry]

The present invention is applicable to image formation apparatuses.

Further, the present invention is not limited to these embodiments, but variations and modifications may be made without departing from the scope of the present invention.

## Claims

1. An image formation apparatus, **characterized by**:
an input/output unit for controlling
reception of an image data request from an information outputting apparatus connected through a communication line, the information outputting apparatus requesting the image data, and
transmission of the image data to the information outputting apparatus according to the image data request;
a storage unit for storing the image data in a predetermined format; and
a format conversion unit for converting the image data into a format specified in the image data request; wherein
the input/output unit provides the image data in the specified format to the information outputting apparatus.

2. A image formation apparatus as claimed in claim 1, **characterized in that**
the format conversion unit converts the format of the image data into one of PDF (Portable Document Format), TIFF (Tagged Image File Format), and JPEG (Joint Photographic Experts Group).

3. A image formation apparatus as claimed in claim 2, **characterized in that**
the format conversion unit converts the format of the image data into one of a single page format PDF and a multi-page PDF format according to the image data request.

4. A image formation apparatus given in any one of claims 2 and 3, **characterized in that**
the format conversion unit specifies a user password for opening the image data in the PDF format according to the image data request, and
the input/output unit provides the image data in the PDF format with the user password being specified to the information outputting apparatus.

5. A image formation apparatus as claimed in any one of claims 2 through 4, **characterized in that**
the format conversion unit specifies a master password for specifying and modifying at least one of security information, editing, and printing of the image data in the PDF format according to the image data request, and
the input/output unit provides the image data in the PDF format with the master password being specified to the information outputting apparatus.

6. A image formation apparatus as claimed in claim 5, **characterized in that**
the format conversion unit specifies and modifies at least one of security information, editing, and printing of the image data in the PDF format, according to the image data request.

7. A image formation apparatus as claimed in claim 5, **characterized in that**
the format conversion unit specifies an encryption level of the image data in the PDF format according to the image data request.

8. A image formation apparatus as claimed in claim 7, **characterized in that**
the format conversion unit specifies and modifies at least one of security information, editing, and printing of the image data in the PDF format according to the encryption level according to the image data request.

9. A image formation apparatus as claimed in any one of claims 1 and 2, **characterized in that**
the format conversion unit converts the image data into one of a single page format and a multi-page format according to the image data request.

10. A image formation apparatus as claimed in any one of claims 1 and 2, **characterized in that**
the format conversion unit specifies the user password for opening the image data in the specified format according to the image data request, and
the input/output unit provides the image data in the specified format protected by the user password to the information outputting apparatus.

11. A image formation apparatus as claimed in any one of claims 1 and 2, **characterized in that**
the format conversion unit specifies the master password for specifying and modifying at least one of security information, editing, and printing of the image data in the specified format according to the image data request, and
the input/output unit provides the image data in the specified format protected by the master password to the information outputting apparatus.

12. A image formation apparatus as claimed in claim 11, **characterized in that**
the format conversion unit specifies and modifies at least one of security information, editing, and printing of the image data in the specified format according to the image data request.

13. The image formation apparatus as claimed in claim 11, **characterized in that**
the format conversion unit specifies the encryption level of the image data in the specified format according to the image data request.

14. A image formation apparatus as claimed in claim 13, **characterized in that**
the format conversion unit specifies and modifies at least one of
security information, editing, and printing of the image data in the specified format according to the encryption level according to the image data request.

15. An information outputting apparatus, **characterized by**:
a stored data referencing unit for requesting image data in a specified format from an image formation apparatus connected through a communication line, and for acquiring the image data provided by the image formation apparatus; and
a format specifying unit for specifying a format of the image data to be acquired; wherein
the stored data referencing unit requests the image data in the specified format of the image formation apparatus.

16. A information outputting apparatus as claimed in claim 15, **characterized in that**
the format specifying unit specifies one of formats of PDF (Portable Document Format), TIFF (Tagged Image File Format), and JPEG (Joint Photographic Experts Group).

17. A information outputting apparatus as claimed in claim 16, **characterized in that**
the format specifying unit specifies one of a single page format and a multi-page format if the PDF format is specified.

18. A information outputting apparatus as claimed in any one of claims 16 and 17, **characterized in that**
the format specifying unit specifies a user password for opening the image data in the PDF format, and
the stored data referencing unit encrypts the user password and outputs the encrypted user password.

19. A information outputting apparatus as claimed in any one of claims 16 through 18, **characterized in that**
the format specifying unit specifies a master password for specifying at least one of security information, editing, and printing of the image data in the PDF format, and
the stored data referencing unit encrypts the master password and outputs the encrypted master password.

20. A information outputting apparatus as claimed in claim 19, **characterized in that**
the format specifying unit specifies and modifies at least one of security information, editing, and printing of the image data in the PDF format.

21. A information outputting apparatus as claimed in claim 19, **characterized in that**
the format specifying unit specifies the encryption level of the image data in the PDF format.

22. A information outputting apparatus as claimed in claim 21, **characterized in that**
the format specifying unit specifies at least one of security information, editing, and printing of the image data in the PDF format according to the encryption level.

23. A information outputting apparatus as claimed in any one of claims 15 and 16, **characterized in that**
the format specifying unit specifies one of a single page format and a multi-page format according to the specified format.

24. A information outputting apparatus as claimed in any one of claims 15 and 16, **characterized in that**
the format specifying unit specifies a user password for opening the image data in the specified format, and
the stored data referencing unit encrypts the user password and outputs the encrypted user password.

25. A information outputting apparatus as claimed in any one of claims 15 and 16, **characterized in that**
the format specifying unit specifies a master password for specifying and modifying at least one of security information, editing, and printing of the image data in the specified format, and
the stored data referencing unit encrypts the master password and outputs the encrypted master password.

26. A information outputting apparatus as claimed in claim 25, **characterized in that**
the format specifying unit specifies at least one of security information, editing, and printing of the image data in the specified format.

27. A information outputting apparatus as claimed in claim 25, **characterized in that**
the format specifying unit specifies the encryption level of the image data in the specified format.

28. A information outputting apparatus as claimed in claim 27, **characterized in that**
the format specifying unit specifies at least one of security information, editing, and printing of the image data in the specified format.

29. A stored data acquisition method, **characterized by**:
an image data request step of requesting image data from an image formation apparatus connected through a communication line;
an image data request receiving step of receiving the image data request from an information outputting apparatus;
a format conversion step of converting the image data processed in a predetermined format into a format specified by the image data request;
a transmitting step of providing the image data in the specified format to the information outputting apparatus; and
an image data acquisition step of acquiring the image data in the specified format provided by the image formation apparatus.

30. A program for a computer
to function as an input/output unit for controlling reception of an image data request from an information outputting apparatus that requests the image data, the information outputting apparatus being connected through a communication line, and for controlling transmission of the image data to the information outputting apparatus according to the image data request, and
to function as a format conversion unit for converting the image data in a predetermined format into a format specified by the image data request, wherein
the image data in the specified format are provided to the information outputting apparatus when the computer functions as the input/output unit.

31. A program for a computer
to function as an image data referencing unit for requesting image data from an image formation apparatus connected through a communication line, and for acquiring the image data provided by the image formation apparatus, and
to function as a format specifying unit for specifying a format of the image data to be acquired, wherein
the image data in the specified format are requested from the image formation apparatus when the computer is functioning as the image data referencing unit.

32. A computer-readable recording medium for storing the program as claimed in any one of claims 30 and 31.
